# EUROPEAN PATENT APPLICATION

(11) **EP 4 006 841 A1**
(43) Date of publication of application: **01.06.2022**
(21) Application number: 20843304.5
(22) Date of filing: 06.07.2020
(51) Int. Cl.: G06T 11/60, H04N 1/387

(54) **SERVER, PROGRAM, METHOD, AND SYSTEM**

(30) Priority: 23.07.2019 JP 2019135451
(71) Applicant: NHN CORPORATION, Bundang-gu Seonganm-si, Gyeonggi-do 13487 (KR); NHN Comico Corp., Minato-ku Tokyo 105-6322 (JP)
(72) Inventor: TAKAHASHI Hiroyuki, Tokyo 105-6322 (JP)
(74) Representative: dompatent von Kreisler Selting Werner - Partnerschaft von Patent- und Rechtsanwälten mbB
(86) International application number: PCT/JP2020/026327
(87) International publication number: WO 2021/014945

(57) **Abstract**

A server capable of adjusting a display format of an electronic comic according to a user's preference and a usage pattern includes an identification unit configured to identify each of a plurality of frames based on a comic including the plurality of frames, a determination unit configured to determine an order of the plurality of frames identified by the identification unit, and an organization unit configured to organize an arrangement of the frames based on the order determined by the determination unit. The organization unit may organize an arrangement of the frames based on an instruction signal configured to instruct a display format.

## Description

### TECHNICAL FIELD

The present invention relates to a server, a program, a method, and a system. In particular, the present invention relates to a server, a program, a method, and a system for organizing original electronic books into desired display formats.

### BACKGROUND ART

In recent years, electronic books that can be read using a portable terminal have become widespread. Since electronic books can be downloaded to a portable terminal, one portable terminal can be used to read multiple electronic books. Not only those created for electronic books but also those made by digitizing paper-based books are used as the above-mentioned electronic books. In the latter case, the digitized books are displayed page-by-page on a display of a portable terminal, and the screen is switched page-by-page.

Electronic comics are widely used as one of the electronic books described above. In an electronic comic in which is a digitalized book (an independent book) of a conventional paper medium, each scene is separated by frames, and a plurality of frames is arranged in one page. In the electronic comic described above, the positional relationship of each frame in one page is fixed. Therefore, in the case where the user handles image data of the electronic comic, there is a restriction on the handling of the image data of the electronic comic because it is necessary to treat one page with the fixed position of each frame as one image data.

With respect to such image data of an electronic comic, a technique has been developed for performing information processing on information included in each frame by creating image data of each frame based on image data included in each page (for example, patent literature 1). In the patent literature 1, image data is generated for each frame constituting each page. In patent literature 1, in the case where character information included in the frame is retrieved as a search keyword, an image of a frame in which the character information is described is output as a search result.

### CITATION LIST

### PATENT LITERATURE

Patent literature 1 : Japanese Laid Open Patent No. 2009-98829

### SUMMARY OF INVENTION

### TECHNICAL PROBLEM

For example, in the case where a service for providing electronic comics is used by using a portable terminal such as a cellular phone or a smartphone, it is preferable to be able to adjust a display format of electronic comics according to the user's preference or usage pattern. However, in most electronic comics as described above, since the positional relationship of each frame in one page is fixed, the adjustment of the display format is limited. Patent literature 1 simply describes a technique of outputting an image of a frame in which the character information to be searched is described as a search result of the character information, and does not adjust the display format of the electronic comic according to the user's preference.

An embodiment of the present invention has been made in view of the above problems, and an object thereof is to provide a server, a program, a method, and a system capable of adjusting a display format of an electronic comic according to a user's preference and a usage pattern.

### SOLUTION TO PROBLEM

A server according to an embodiment of the present invention includes an identification unit configured to identify each of a plurality of frames based on image data of a comic including the plurality of frames, a determination unit configured to determine an order of the plurality of frames identified by the identification unit, and an organization unit configured to organize an arrangement of the frames based on the order determined by the determination unit.

The organization unit may organize an arrangement of the frames based on an instruction signal configured to instruct a display format.

The instruction signal may include a signal configured to instruct one display format from two or more of display formats selected from a group including a first display format configured to display an original of the image data, a second display format configured to display the frames in a vertical direction, and a third display format configured to display the frames in a horizontal direction.

The instruction signal may include a signal configured to specify the number of frames displayed on a display of a terminal displaying the organized frames.

The organization unit may organize an arrangement of the frames based on terminal information of the terminal displaying the organized frames.

The identification unit may divide the image data into a plurality of areas in which pixels displaying the same color are continuous in each area of the plurality of areas, identify a margin based on the plurality of areas, and identify each frame of the plurality of frames based on the margin.

The identification unit may identify the largest area among the divided plurality of areas as the margin.

The identification unit may identify the area other than the margin as the frame.

The identification unit may binarize the image data, and divide the image data into the plurality of areas based on the binarized image data.

The plurality of areas includes a first area and a second area, and in the case where the first area exists inside the second area or the first area and the second area overlap, the identification unit may integrate the first area and the second area into one area.

In the case where a space larger than the size of the smallest frame among the plurality of frames identified by the identification unit is present in the margin, the identification unit may identify the space as the frame.

The plurality of frames may include a first frame, and the determination unit may determine an order of the first frame in the plurality of frames based on the presence or absence of other frames adjacent to the first frame in the horizontal direction of the image data.

The plurality of frames may further include a second frame, and in the case where the second frame exists in the horizontal direction of the first frame, the determination unit may determine the order of the first frame in an order earlier than an order of the second frame.

The organization unit may display information to a user on an interface regarding whether the arrangement of the plurality of frames can be organized.

The organization unit may provide an interface with a display format designated, prohibited, or recommended for each comic.

The server may further include a storage unit that associates and stores the character data of the lines in a frame or character identification information of the character in the frame in each of the plurality of frames, and the organization unit may organize the arrangement of the frames based on the order determined by the determination unit and the character data or the character identification information.

A program according to an embodiment of the present invention is configured to be executed by a computer to identify each frame of a plurality of frames based on image data of a comic including the plurality of frames, determine each order of each of the identified plurality of frames, and organize an arrangement of the frames based on the determined order.

A method according to an embodiment of the present invention identifies each frame of the plurality of frames based on image data of a comic including the plurality of frames, determines each order of the identified plurality of frames, and organizes an arrangement of the frames based on the determined order.

A system according to an embodiment of the present invention includes: a server having an identification unit configured to identify each of a plurality of frames based on first image data of a comic including the plurality of frames; a determination unit configured to determine an order of each of the plurality of frames identified by the identification unit; and an organization unit configured to organize an arrangement of the frames based on the order determined by the determination unit; and a communication terminal configured to receive second image data of each of the plurality of frames from the server and display the frames in an arrangement organized by the organization unit.

The server may organize the arrangement of the frames based on a display format instructed by the communication terminal.

The server may receive terminal information related to a display function of the communication terminal and provide a method of organizing the arrangement of the frames based on the terminal information and the first image data.

### EFFECT OF INVENTION

According to an embodiment of the present invention, it is possible to provide a server, a program, a method, and a system capable of adjusting a display format of an electronic comic according to a user's preference and a usage pattern.

### BRIEF DESCRIPTION OF DRAWINGS

Fig. 1 is a diagram showing an outline of an electronic book provision system according to an embodiment of the present invention.
Fig. 2 is a schematic view showing a hardware configuration of a server used in an electronic book provision system according to an embodiment of the present invention.
Fig. 3 is a schematic view showing a hardware configuration of a communication terminal used in an electronic book provision system according to an embodiment of the present invention.
Fig. 4 is a schematic view showing a functional configuration of a server used in an electronic book provision system according to an embodiment of the present invention.
Fig. 5A is a flowchart showing an operation of an electronic book provision system according to an embodiment of the present invention.
Fig. 5B is a flowchart showing an operation of an electronic book provision system according to an embodiment of the present invention.
Fig. 6 is a flowchart showing a frame identification method of an electronic book provision system according to an embodiment of the present invention.
Fig. 7 is a diagram for explaining a method of identifying a frame of an electronic comic in an electronic book provision system according to an embodiment of the present invention.
Fig. 8 is a diagram for explaining a method of identifying a frame of an electronic comic in an electronic book provision system according to an embodiment of the present invention.
Fig. 9 is a diagram for explaining a method of identifying a frame of an electronic comic in an electronic book provision system according to an embodiment of the present invention.
Fig. 10 is a diagram for explaining a method of identifying a frame of an electronic comic in an electronic book provision system according to an embodiment of the present invention.
Fig. 11 is a diagram for explaining a method of identifying a frame of an electronic comic in an electronic book provision system according to an embodiment of the present invention.
Fig. 12 is a diagram for explaining a method of identifying a frame of an electronic comic in an electronic book provision system according to an embodiment of the present invention.
Fig. 13 is a diagram for explaining a method of determining an order of identified frames in an electronic book provision system according to an embodiment of the present invention.
Fig. 14 is a diagram for explaining a method of determining an order of identified frames in an electronic book provision system according to an embodiment of the present invention.
Fig. 15 is a diagram for explaining a method of determining an order of identified frames in an electronic book provision system according to an embodiment of the present invention.
Fig. 16 is a diagram for explaining a method of determining an order of identified frames in an electronic book provision system according to an embodiment of the present invention.
Fig. 17 is a diagram for explaining a method of determining an order of identified frames in an electronic book provision system according to an embodiment of the present invention.
Fig. 18 is a diagram for explaining a method of determining an order of identified frames in an electronic book provision system according to an embodiment of the present invention.
Fig. 19 is a diagram showing an example of data stored in a database in an electronic book provision system according to an embodiment of the present invention.
Fig. 20 is a diagram showing an example of an interface configured to accept an instruction of a display format from a user who browses an electronic comic in an electronic book provision system according to an embodiment of the present invention.
Fig. 21 is a diagram showing an example of displaying a frame in a display format instructed by a user in an electronic book provision system according to an embodiment of the present invention.
Fig. 22 is a diagram showing an example of displaying a frame in a display format instructed by a user in an electronic book provision system according to an embodiment of the present invention.
Fig. 23 is a diagram showing an example of displaying a frame in a display format instructed by a user in an electronic book provision system according to an embodiment of the present invention.
Fig. 24 is a schematic view showing a functional configuration of a server used in an electronic book provision system according to an embodiment of the present invention.
Fig. 25 is a diagram showing an example of data stored in a database in an electronic book provision system according to an embodiment of the present invention.
Fig. 26 is a diagram showing an example of an interface for suggesting a display format to a user who browses an electronic comic in an electronic book provision system according to an embodiment of the present invention.
Fig. 27 is a schematic view showing a functional configuration of a server used in an electronic book provision system according to an embodiment of the present invention.
Fig. 28 is a diagram for explaining a method of identifying a part of a margin as a frame in an electronic book provision system according to an embodiment of the present invention.
Fig. 29 is a diagram for explaining a method of identifying a part of a margin as a frame in an electronic book provision system according to an embodiment of the present invention.
Fig. 30 is a diagram for explaining a method of identifying a part of a margin as a frame in an electronic book provision system according to an embodiment of the present invention.
Fig. 31 is a diagram for explaining a method of identifying a part of a margin as a frame in an electronic book provision system according to an embodiment of the present invention.
Fig. 32 is a flowchart showing an operation of an electronic book provision system according to an embodiment of the present invention.

### DESCRIPTION OF EMBODIMENTS

Referring to the drawings, an electronic book provision system, an electronic book provision server and a communication terminal used in the system according to an embodiment of the present invention, and functions thereof will be described below. An interface and an electronic comic displayed on a communication terminal will be described with reference to the drawings. However, the electronic book provision system and the like according to an embodiment of the present invention can be implemented in many different modes. The present invention is not to be construed as being limited to the description of the following examples. In the drawings referred to in this embodiment, the same portions or portions having similar functions are denoted by the same reference numerals or letters of the alphabet are added after being denoted by the same reference numerals, and a repetitive description thereof is omitted. The electronic book provision system and the electronic book provision server include not only systems and servers that have the function of providing electronic books directly to a user, but also systems and servers that are used to provide electronic books. That is, in the following description, the electronic book provision system and the electronic book provision server include a system and a server having a function of organizing electronic books in order to provide electronic books.

In the following embodiment, a transverse direction when a comic is displayed in the viewing direction of image data of an electronic comic is referred to as a horizontal direction, and a longitudinal direction is referred to as a vertical direction. When displaying an electronic comic on a communication terminal, since the longitudinal direction of a display of the communication terminal is often used to match the vertical direction, the longitudinal direction of the display is called a vertical direction, and the lateral direction is sometimes referred to as a horizontal direction. However, the above expressions do not limit the present invention to a configuration in which the vertical direction of the electronic comic is displayed in alignment with the longitudinal direction of the display.

In the following embodiments, a configuration in which a mobile communication terminal is used as a communication terminal for communicating with an electronic book provision server and displaying an electronic book is exemplified, but is not limited to this configuration. Techniques between different embodiments may be integrated unless there is a particular technical contradiction.

### <First embodiment>

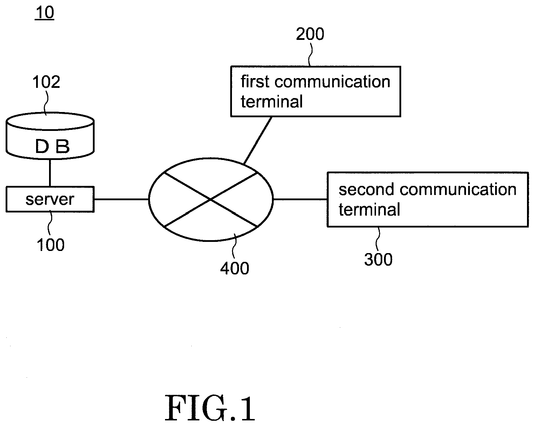

An electronic book provision system 10 according to the first embodiment of the present invention, an electronic book provision server 100 used in the electronic book provision system 10, a first communication terminal 200, and a second communication terminal 300, and a program for operating them will be described using Fig. 1 to Fig. 23. The electronic book provision system 10 according to the first embodiment has a configuration in which the electronic book provision server 100, the first communication terminal 200, and the second communication terminal 300 are communicably connected via a network 400.

In the present embodiment, the first communication terminal 200 is a communication terminal for browsing electronic comics. The first communication terminal 200 is a communication terminal requiring the electronic book provision server 100 to browse an electronic comic so that the electronic comic is displayed in a form desired by the user. The second communication terminal 300 is a communication terminal that registers electronic comics with the electronic book provision server 100. For example, the second communication terminal 300 is a communication terminal used by a creator of a comic or an administrator or an employee of the electronic book provision server 100.

In the following explanation, the first communication terminal 200 is a mobile communication terminal such as a smartphone and a tablet terminal. On the other hand, the second communication terminal 300 may be a mobile communication terminal as described above, and may also be a non-mobile communication terminal such as a desktop personal computer (PC). The first communication terminal 200 may also be a non-mobile communication terminal.

### [Outline of electronic book provision system 10]

Fig. 1 is a diagram showing an outline of an electronic book provision system according to an embodiment of the present invention. As shown in Fig. 1, the electronic book provision system 10 includes the electronic book provision server 100, the first communication terminal 200, and the second communication terminal 300. The electronic book provision server 100 is an information processing device. The first communication terminal 200 is a communication terminal for mobile. The electronic book provision server 100 is connected to a database 102.

The electronic book provision server 100 provides the first communication terminal 200 with electronic comics registered by the second communication terminal 300. As will be described in detail later, the electronic book provision server 100 has a function of identifying each of a plurality of frames and determining an order of each identified frame based on image data of the electronic comic including the plurality of frames. The electronic book provision server 100 provides the first communication terminal 200 with an interface for specifying a display format of the electronic comic when the electronic comic is provided to the first communication terminal 200. The electronic book provision server 100 organizes an arrangement of the frames of the electronic comic according to content instructed by the interface, and provides the electronic comic to the first communication terminal 200. As will be described in detail later, the electronic book provision server 100 has a function of organizing the arrangement of the frames based on the order of the frames determined as described above.

The database 102 stores information about the electronic comics registered by the second communication terminal 300 and each frame generated based on the registered electronic comics. As will be described in detail later, the information related to the frame includes coordinates of the frame, the size of the frame, and the order of the frames in each page. The content if this information is related to each other.

Each of the electronic book provision server 100, the first communication terminal 200, and the second communication terminal 300 are connected to the network 400. In this embodiment, the network 400 is an Internet such as a typical World Wide Web (WWW), a WAN (Wide Area Network), or a LAN (Local Area Network) such as a private LAN. The first communication terminal 200 and the second communication terminal 300 communicate with the electronic book provision server 100 via the network 400.

Although a configuration in which the database 102 is directly connected to the electronic book provision server 100 is exemplified in Fig. 1, an embodiment of the present invention is not limited to this configuration. For example, the database 102 may be directly connected to the network 400 and data may be transmitted and received between the electronic book provision server 100 and the database 102 via the network 400.

### [Hardware configuration of electronic book provision server 100]

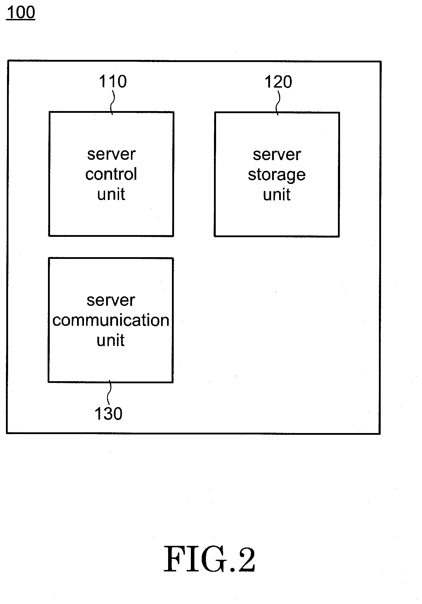

Fig. 2 is a schematic view showing a hardware configuration of a server used in the electronic book provision system according to an embodiment of the present invention. As shown in Fig. 2, the electronic book provision server 100 includes a server control unit 110, a server storage unit 120, and a server communication unit 130.

The server control unit 110 includes a central processing unit (CPU) and storage devices such as registers and memories connected to the CPU. The server control unit 110 executes a program temporarily stored in the memory by the CPU, performs calculation processing in response to various request signals from the first communication terminal 200 and the second communication terminal 300, and provides these communication terminals with content data.

The server storage unit 120 is a storage device capable of storing large amounts of data. The server storage unit 120 stores programs and content data required for calculation processing. Programs stored in the server storage unit 120 are read by the server control unit 110 and temporarily stored in the storage device of the server control unit 110. The server storage unit 120 may be a hard disk or may be a volatile or non-volatile memory. The information stored in the server storage unit 120 may be stored in the database 102 instead of the server storage unit 120. In this embodiment, although information related to the electronic comics and frames is stored in the database 102, this data may be stored in the server storage unit 120.

The server communication unit 130 is a control device capable of transmitting and receiving data to and from external devices, and controls the transmission and reception of data to and from the network 400.

### [Hardware configuration of first communication terminal 200]

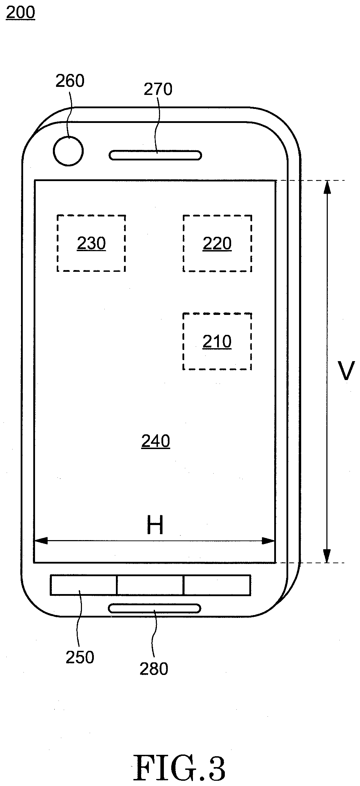

Fig. 3 is a schematic view showing a hardware configuration of a communication terminal used in the electronic book provision system according to an embodiment of the present invention. As shown in Fig. 3, the first communication terminal 200 includes a terminal storage unit 210, a terminal control unit 220, a terminal communication unit 230, a display 240, an operation button 250, a camera 260, a speaker 270, and a microphone 280.

The terminal storage unit 210 stores data such as a program configured to cause the first communication terminal 200 to perform a specific function, an electronic comic including a plurality of frames, terminal information related to the first communication terminal 200 such as a display size, and information of a user who owns the first communication terminal 200. A non-volatile memory such as a flash memory and a volatile memory such as SRAM, DRAM is used as the terminal storage unit 210. Data such as the program is stored in the non-volatile memory. Data such as the program is read from the non-volatile memory when the program is executed and temporarily stored in the volatile memory.

The terminal control unit 220 has an operation circuit such as a CPU and a storage circuit connected to the CPU. The storage device includes memories and registers. The terminal control unit 220 executes programs stored in the terminal storage unit 210 by the CPU, and realizes various functions of the first communication terminal 200 in response to command signals input to the first communication terminal 200.

The terminal communication unit 230 is a control device that can be connected so as to be able to transmit and receive data to and from an external device, and controls transmission and reception of data to and from the network 400.

A general display such as, for example, a liquid crystal display and an organic EL display can be used as the display 240. The size in the vertical direction of the display 240 is a vertical height V, and the size in the horizontal direction is a horizontal width H. The vertical height V and horizontal width H may be expressed by the size of SI units, and may be expressed by the number of pixels in each direction. In the present embodiment, the vertical height V and the horizontal width H are represented by the number of pixels in each direction. The display 240 has a touch sensor. The touch sensor may be a sensor such as a resistance film type, an electrostatic capacitance type, an optical type, or the like. The touch sensor detects a screen operation by the user, and transmits detection signals based on the screen operation by the user to the terminal control unit 220. In this embodiment, operations such as selection and input of instruction contents are performed using the touch sensor provided in the display 240.

The operation button 250 is provided below the display 240. The operation button 250 may be a physical button or a touch sensor as described above. Instead of the touch sensor of the display 240, the operation button 250 may be used to perform an operation such as selection and input of the instruction contents.

Although a configuration in which the first communication terminal 200 includes the camera 260, the speaker 270, and the microphone 280 is exemplified in Fig. 3, an embodiment of the present invention is not limited to this configuration. If not necessary, these configurations may be omitted.

Although a smartphone is shown as an example of the first communication terminal 200 in Fig. 3, these communication terminals used in the electronic book provision system 10 are not limited to the smartphone. A mobile phone, a tablet PC, a PDA, a PHS, a notebook PC, a desktop PC, or the like may be used as a communication terminal used in the electronic book provision system 10 in addition to the smartphone.

### [Functional configuration of electronic book provision server 100]

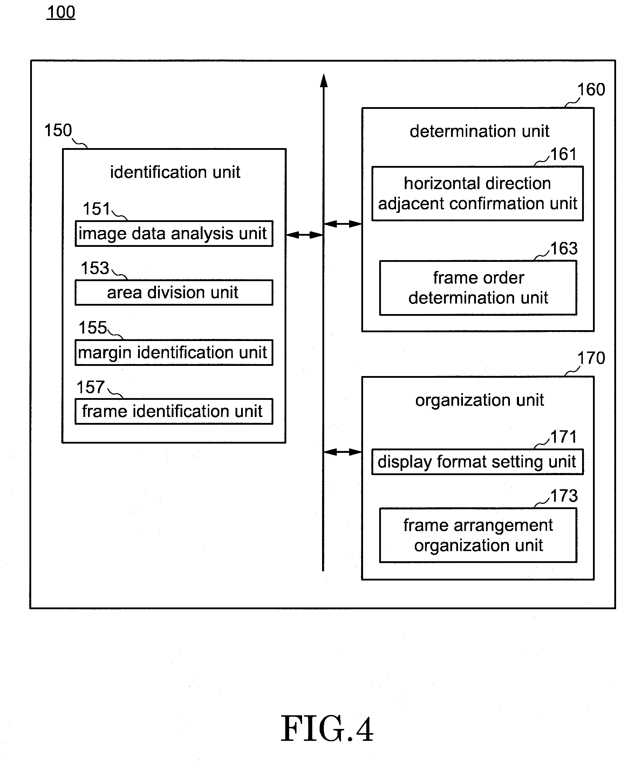

Fig. 4 is a schematic view showing a functional configuration of a server used in the electronic book provision system according to an embodiment of the present invention. As shown in Fig. 4, the electronic book provision server 100 includes an identification unit 150, a determination unit 160, and an organization unit 170. These functional units are communicably connected to each other via a bus, for example. The identification unit 150 identifies each of the plurality of frames based on the image data of the comic including the plurality of frames. The determination unit 160 determines an order of the plurality of frames identified by the identification unit 150. The organization unit 170 organizes an arrangement of the frames based on the order determined by the determination unit 160.

The server control unit 110 (e.g., the CPU) of the electronic book provision server 100 executes the program stored in the server storage unit 120 to realize the functions of the functional units described above. In the present embodiment, although a configuration in which all the above-described functional units are included in one electronic book provision server 100 is exemplified, an embodiment of the present invention is not limited to this configuration. For example, these functional units may be provided on different servers, and the functions of the electronic book provision system 10 may be realized by these servers cooperating with each other.

The identification unit 150 includes an image data analysis unit 151, an area division unit 153, a margin identification unit 155, and a frame identification unit 157.

The image data analysis unit 151 analyzes and simplifies the image data of the original electronic comic registered by the second communication terminal 300. Specifically, the image data analysis unit 151 binarizes the image data. In the present embodiment, although a configuration in which the image data analysis unit 151 binarizes the image data is exemplified, an embodiment of the present invention is not limited to this configuration. For example, multivalued operations more than ternarization may be performed. The simplification of the image data is performed to reduce the amount of information handled in the later processing and to improve the processing speed. Therefore, if the processing speed is sufficient, the image data analysis unit 151 may be omitted.

The area division unit 153 divides the image data simplified by the processing of the image data analysis unit 151 into a plurality of areas (or zones). Specifically, the area division unit 153 divides the image data into a plurality of areas by performing a first labeling process on the image data. The first labeling process is a process of dividing the image data into a plurality of areas in which pixels displaying the same color are continuous. In other words, in the first labeling process, even if adjacent areas of pixels having the same color are separated by pixels having different colors, the adjacent areas of pixels having the same color are recognized as different areas. However, the same color in the first labeling process is not limited to exactly the same color. For example, adjacent colors or adjacent gradations in chromaticity coordinates or gray scale may be treated as the same color.

The margin identification unit 155 identifies a margin based on the image data divided by the processing of the area division unit 153. Specifically, the margin identification unit 155 identifies the largest area among the plurality of areas divided as described above as the margin. Usually, when the image data for one page is divided as described above, the occupation area of the margin is the largest in many cases, so that the margin can be identified by the above processing. The area having the largest number of pixels among the divided plurality of areas may be identified as the margin. However, in the case where the occupation area of the margin among the divided plurality of areas is not the largest, the margin may be identified by algorithms other than those described above. For example, normally, since the margin constitutes the outermost periphery of the image data, if the area identified as the margin does not constitute the outermost periphery or does not exist at the outermost periphery as a result of identifying the area with the largest area as the margin it is highly likely that the identification of the margin is not performed normally. Therefore, in such a case, it may be determined that an abnormality has occurred in the identification of the margin, and an error message may be notified, or the margin may be automatically identified by a different algorithm.

The frame identification unit 157 identifies each of the plurality of frames based on the margin identified by the processing of the margin identification unit 155. More specifically, the frame identification unit 157 identifies areas other than the margin as frames.

The frame identification unit 157 has a function of identifying the position of the frame identified as described above. Specifically, the frame identification unit 157 performs a second labeling process on the image data for which the frame is identified. The second labeling process is a process of identifying a frame (rectangular area) surrounding the outer periphery of a continuous area among the areas other than the area identified as the margin by the margin identification unit 155, and obtaining the coordinates of four points (for example, four corners of upper right, upper left, lower right, and lower left) of the frame. In the second labeling process, the coordinates of two points (e.g., upper right and lower left) may be obtained instead of obtaining the coordinates of four points. The position of the frame can be identified by the second labeling process. The frame surrounding the outer periphery of the area may be a frame contacting the outer periphery of the area (circumscribing area).

Further, the frame identification unit 157 performs integration processing of the area identified as the frame in the case where a certain specific condition is satisfied. For example, in the case where the areas whose positions are identified as frames overlap each other by the second labeling process, the overlapped area is integrated and re-identified as one frame. In other words, in the case where the areas which should be originally identified as one frame are recognized as two areas (frames) of a first area and a second area, and the first area exists inside the second area or the first area and the second area overlap, the first area and the second area are integrated into one area. By the above integration process, one frame that is mistakenly recognized as a separate frame can be correctly identified as one frame.

In addition to the above-mentioned functions, the identification unit 150 may have a function of recognizing lines in a frame and converting them into character data, and a function of identifying characters in the frame. The above functions are performed by general image analysis on image data of an electronic comic. In this case, the character-recognized lines and characters are stored in the database 102 associated with the frame. In other words, the electronic book provision server 100 may have a storage unit. The storage unit stores the character data of the lines in the frame or the character identification information of the characters in the frame in association with each frame of the plurality of frames.

The determination unit 160 includes a horizontal direction adjacent confirmation unit 161 and a frame order determination unit 163. The determination unit 160 determines an order of the plurality of frames identified by the identification unit 150.

The horizontal direction adjacent confirmation unit 161 confirms whether there is another frame adjacent to the first frame to which the order is to be given in the horizontal direction. For example, it confirms whether there is another frame in an area where the area from the upper end of the first frame to the lower end in the vertical direction is extended horizontally. However, it may confirm whether there is another frame in an area where a range from a position which is moved to the inside (downward) by a predetermined distance from the upper end of the first frame to a position moved to the inside (upward) by a predetermined distance from the lower end of the first frame is extended horizontally. That is, the area for confirming whether there is another frame may exclude the area in the vicinity of the upper end of the first frame and the area in the vicinity of lower end of the first frame. In other words, in the case where another frame slightly overlaps the vicinity of the upper end and the vicinity of the lower end of the first frame in the horizontal direction, it may be determined that the first frame and the other frame are not adjacent to each other in the horizontal direction.

The frame order determination unit 163 determines the order of each frame based on the positional relationship of each frame in the vertical direction and the confirmation result of whether there is another frame in the horizontal direction of the first frame by the horizontal direction adjacent confirmation unit 161. For example, in a case where the electronic comic is a comic of a type in which a page is turned from left to right, the frames are arranged vertically in order from the top. In this type of comic, in the case where there are horizontally adjacent frames (in the case where there is a plurality of frames at the same position in the vertical direction), these frames are generally arranged to be read in order from the right. Therefore, in the case where the horizontal direction adjacent confirmation unit 161 determines that there is another frame (the first frame) on the right side of the second frame, the frame order determination unit 163 determines the order of the first frame as an order earlier than the order of the second frame. In the case where the electronic comic is a comic of a type in which a page is turned from right to left, a reverse process from that described above and the following description is performed.

The organization unit 170 has a display format setting unit 171 and a frame arrangement organization unit 173. The organization unit 170 organizes the arrangement of frames based on the order determined by the determination unit 160.

The display format setting unit 171 provides the first communication terminal 200 with an interface for specifying the display format of the electronic comic, and sets the display format in accordance with the content instructed by the interface. For example, in the case where an instruction signal instructing an original first display format is input by the first communication terminal 200, the function of the frame arrangement organization unit 173 is disabled and the image data of the original electronic comic is displayed. In the case where the instruction signal instructing a second display format for vertical reading, in which the frames are vertically arranged and displayed, is input by the first communication terminal 200, the display format setting unit 171 causes the frame arrangement organization unit 173 to arrange the frames in the vertical direction. In the case where the instruction signal instructing a third display format for lateral reading, in which the frames are horizontally arranged and displayed, is input by the first communication terminal 200, the display format setting unit 171 causes the frame arrangement organization unit 173 to arrange the frames in the horizontal direction.

The display format setting unit 171 has a function of setting the number of frames to be displayed on the display of the first communication terminal 200, and a function of automatically adjusting the sizes of frames to be displayed based on the width and height of the display. That is, the instruction signal includes a signal instructing these functions. For example, the display format setting unit 171 may have a function of selecting an indication of enlargement or reduction of a frame, such as "large", "medium", "small" or the like. For example, in the case where "large" is selected, all frames may be enlarged by the same magnification, or only frames of a certain size or less may be enlarged. In the latter instance, the necessity of enlargement may be determined based only on the size in the horizontal direction, or the necessity of enlargement may be determined based only on the size in the vertical direction. Alternatively, the necessity of enlargement may be determined based on the area of the frame.

The function of setting the number of frames sets the display format so that the set number of frames are displayed with respect to the vertical height V of the display. This function may control fade-in and fade-out of frames so that only the set number of frames are displayed on the display, and may adjust the size of frames in the vertical direction so that the set number of frames are displayed on the display. However, this function does not necessarily have to be a function of controlling the number of frames set in the display to be displayed, and the average value of sizes of the plurality of frames in the vertical direction may be calculated, and the plurality of frames may be enlarged by equal magnification so that the average value matches or approximates the set number. In the case where the plurality of frames is enlarged, each frame may be enlarged at different magnifications.

The function of adjusting the size of the frame displayed based on the width and height of the display has a function of adjusting the size of each frame based on the size of the frame in the vertical direction with respect to the vertical height V of the display and/or the size of the frame in the horizontal direction with respect to the horizontal width H of the display. As described above, in the present embodiment, the vertical height V of the display means the number of pixels in the vertical direction of the display, and the horizontal width H of the display means the number of pixels in the horizontal direction of the display. That is, the vertical height V and the horizontal width H mean the resolution of the display.

In the case where these functions are performed, the display format setting unit 171 receives terminal information (e.g., vertical height V and horizontal width H) related to the display size of the first communication terminal 200. The terminal information related to the display size may be entered or selected by the first communication terminal 200. Alternatively, the terminal information may be extracted in the background without being entered or selected by the first communication terminal 200. That is, when the first communication terminal 200 transmits the information related to the display format using the interface, the display format setting unit 171 may estimate the display size based on a user agent.

The frame arrangement organization unit 173 organizes the arrangement of frames based on the content (the content instructed by the first communication terminal 200) set by the display format setting unit 171 for the frames whose order has been determined by the frame order determination unit 163. The information organized by the frame arrangement organization unit 173 is transmitted to the first communication terminal 200, and the information is displayed on the display of the first communication terminal 200.

As described above, in the case where the identification unit 150 has the function of converting the lines in the frame into character data and the function of identifying the characters (dramatis personae) in the frame, the organization unit 170 may organize the arrangement of the frames based on the set characters (based on the lines) and characters (dramatis personae). In other words, the organization unit 170 organizes the arrangement of the frames based on the order determined by the determination unit 160 and the character data (based on the lines) or the character (dramatis personae) identification information. For example, in the case where the interface provided by the display format setting unit 171 has items for inputting specific characters (based on the lines) and characters (dramatis personae) and an instruction for displaying a specific character (dramatis personae) is input by the first communication terminal 200, the frame including the character may be extracted to organize the arrangement of the frames. That is, the organization may be performed so that only the frames including the instructed character (dramatis personae) are continuously displayed. The electronic book provision server 100 may include, in addition to the functional units described above, a search unit for searching the instructed characters (based on the lines) or characters (dramatis personae) as search keywords.

### [Operation of electronic book provision system 10]

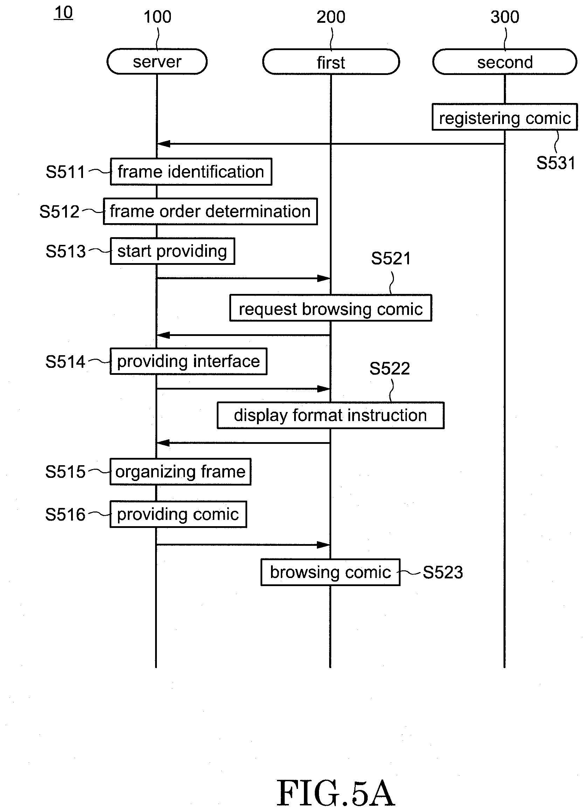

Operation of the electronic book provision system 10 will be described with reference to Fig. 5A. Fig. 5A is a flowchart showing an operation of the electronic book provision system according to the embodiment of the present invention.

First, an electronic comic is transmitted from the second communication terminal 300, which is a communication terminal such as a creator of a comic, to the electronic book provision server 100, and the electronic comic is registered in the electronic book provision server 100 (step S531). In step S531, the original image data of the electronic comic is transmitted to the electronic book provision server 100. The image data contains multiple frames.

In step S531, information identifying the second communication terminal 300, information identifying the user using the second communication terminal 300, and information indicating the author's consent to organizing the original image data may be transmitted to the electronic book provision server 100. In order to obtain information indicating the author's consent, items for confirming the consent to organize and distribute the original image data may be provided in the interface provided by the electronic book provision server 100 to the second communication terminal 300 in step S531. In other words, information related to whether to organize a plurality of frames may be displayed on the interface to the user. Similarly, items may be provided in the interface for displaying a display format designated, prohibited, or recommended by each author, i.e., for each comic. In the case where the latter item is displayed, a display format for one entire electronic comic may be displayed, or a display format for a part of the electronic comic may be displayed. In the case where the latter item is displayed, if the display format is designated by the author, the interface may be displayed so that only the designated display format can be selected. If the display format is prohibited by the author, the interface may be displayed so that the prohibited display format cannot be selected. If the display format is recommended by the author, the interface may be displayed so that only the recommended display format can be selected, and the interface may be displayed such that the recommended display format is highlighted over other display formats.

Upon receiving the original image data, the electronic book provision server 100 identifies each of the plurality of frames included in the image data (step S511), determines the order of the identified frames (step S512), and starts providing the electronic comic for which the display format can be changed according to the user's instruction (step S513). The frame identification in step S511 is performed by the identification unit 150. The determination of the order of the frames in step S512 is performed by the determination unit 160.

If the author's consent to organize the original image data needs to be obtained, the processes of step S511 to step S513 are performed only for the electronic comic for which the author's consent is obtained in step S531.

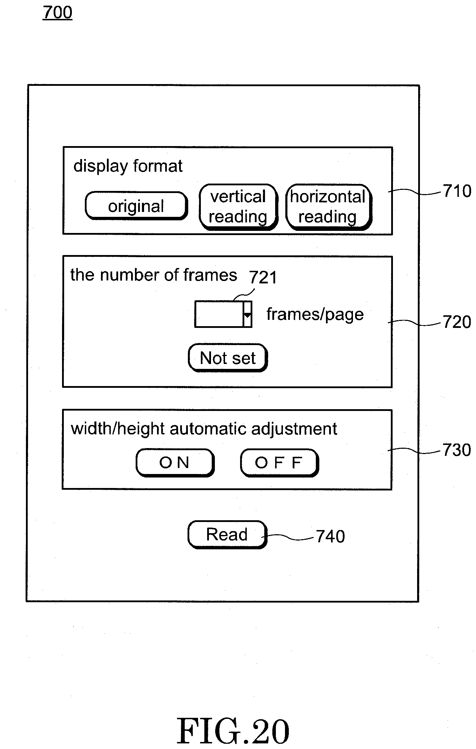

Next, a request for browsing an electronic comic is transmitted from the first communication terminal 200 used by the user of the electronic book provision system 10 to the electronic book provision server 100 (step S521). In response to the request for browsing, the electronic book provision server 100 provides an interface to the first communication terminal 200 for instructing the display format of the electronic comic (step S514). Details of this interface will be described later (see Fig. 20). In the case where the possibility of organizing the above-mentioned data is different depending on the electronic comic, a display related to whether the data organization is permitted or not may be displayed on the first communication terminal 200. For example, a display that can understand that "display format can be changed" may be added to a thumbnail image, an icon, or the like of an electronic comic.

When a display format is instructed by inputting or selecting to the interface by using the first communication terminal 200 (step S522), an instruction signal for instructing the display format is transmitted to the electronic book provision server 100. The electronic book provision server 100 organizes the arrangement of frames based on the instruction signal and the frames whose order is determined by step S511, S512 (step S515), and provides the organized electronic comic to the first communication terminal 200 (step S516). Then the first communication terminal 200 browses the electronic comic in the display format input or selected via the interface (step S523).

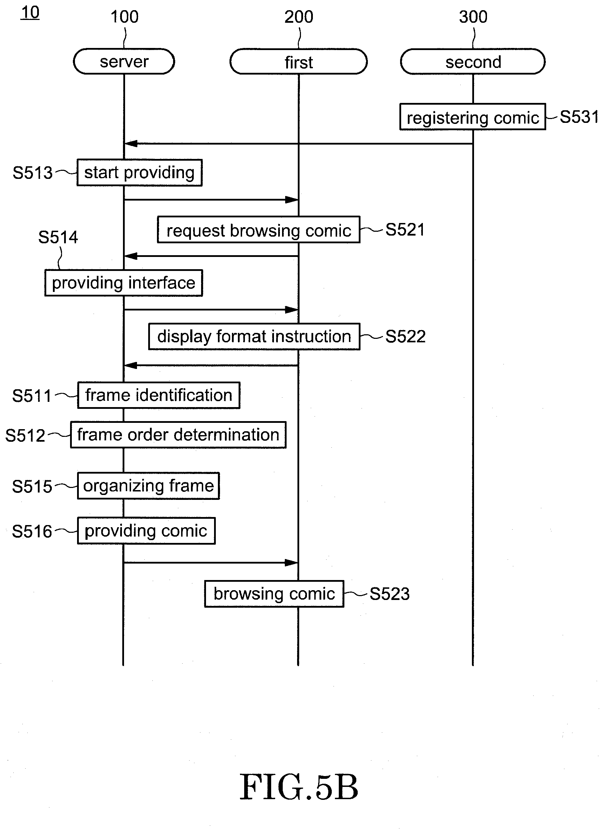

In the operation flow described above, although the configuration in which the operations of S511 (frame identification) and S512 (frame order determination) are performed between step S531 (registering of an electronic comic) and step S521 (comic browsing request) is exemplified, the operation flow is not limited to the configuration. For example, as shown in Fig. 5B, S511 and S512 may be performed after S522 (display format instruction). In other words, it is possible to provide an electronic comic in which the arrangement of frames is organized on the basis of the display format instruction of the frames, with respect to the electronic comic in which the identification of the frames and the determination of the order of the frames are not performed. In this case, for example, the present invention can be applied to an electronic comic managed by a server different from the electronic book provision server 100. That is, in response to the display format instruction from the first communication terminal 200, the electronic book provision server 100 performs a process of organizing the arrangement of frames, and can provide the organized electronic comic to the first communication terminal 200. According to the above-described example, it is not necessary to store location information and information related to the order of the identified frames in the database 102, so that storage capacity can be saved. The operations of S511 (frame identification) and S512 (frame order determination) may be performed between S521 (comic browsing request) and S522 (display format instruction).

### [Frame identification method and method of determining order of frames]

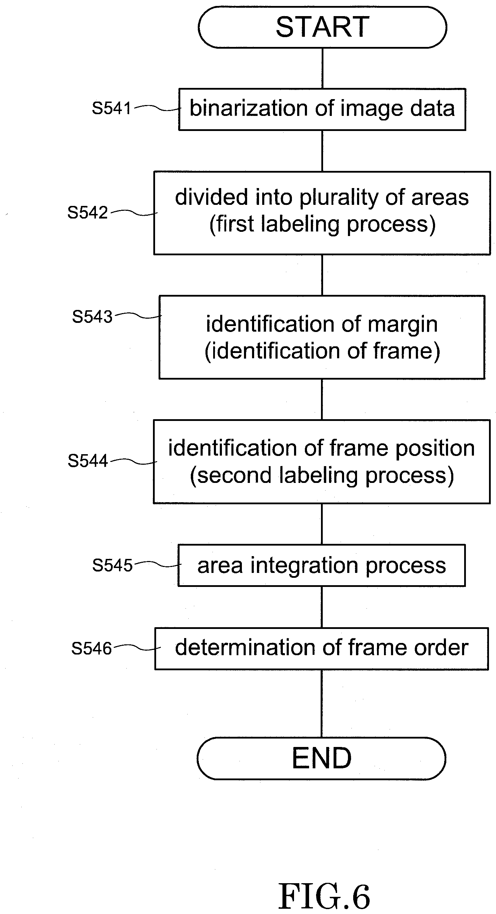

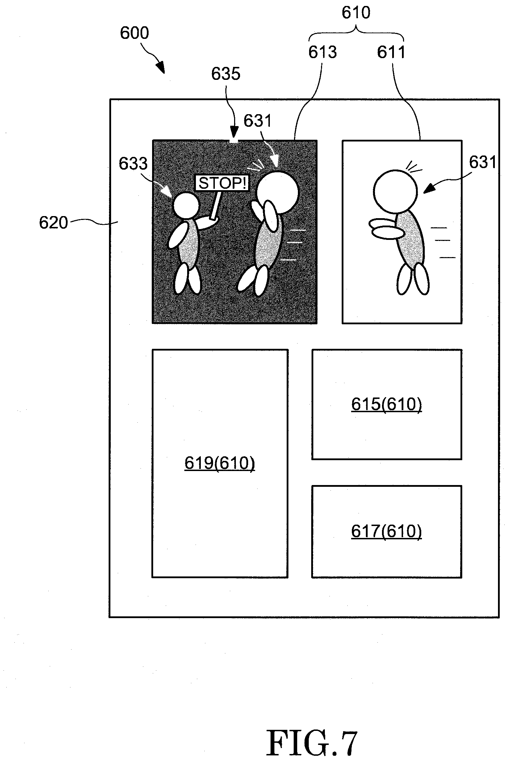

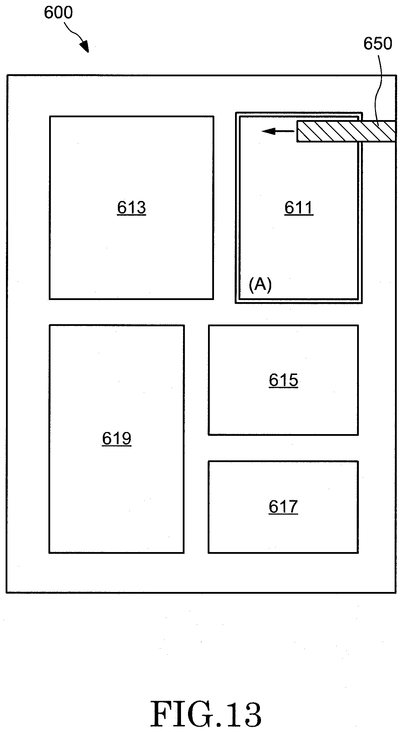

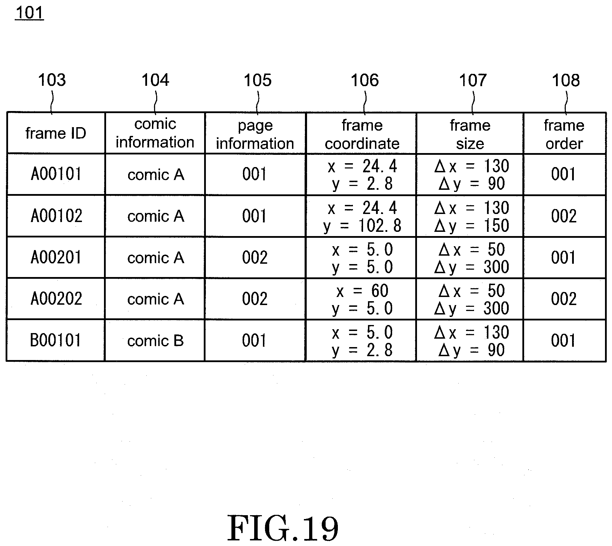

Fig. 6 to Fig. 19 are used to explain in detail the frame identification method and a method of determining the order of frames corresponding to step S511 and step S512 in Fig. 5A and Fig. 5B. Fig. 6 is a flowchart showing a frame identification method of the electronic book provision system according to an embodiment of the present invention. Fig. 7 to Fig. 12 are diagrams for explaining a method of identifying a frame of an electronic comic in an electronic book provision system according to an embodiment of the present invention. Fig. 13 to Fig. 18 are diagrams for explaining a method of determining the order of identified frames in the electronic book provision system according to an embodiment of the present invention. Fig. 19 is a diagram showing an example of data stored in a database in the electronic book provision system according to an embodiment of the present invention.

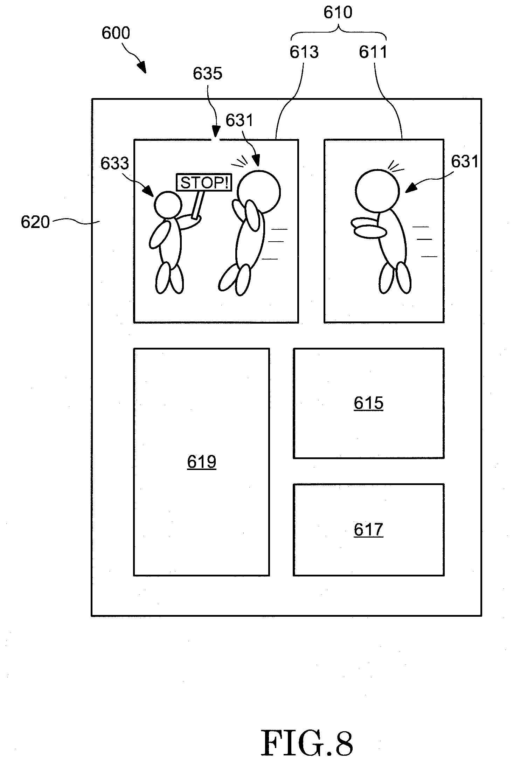

As shown in Fig. 6, when the electronic book provision server 100 receives the original image data, the image data is binarized (step S541). Specific examples of binarization of the image data are shown in Fig. 7 and Fig. 8. Image data 600 in Fig. 7 is image data for one page. As shown in Fig. 7, the image data 600 includes a plurality of frame units 610 and a margin unit 620. In the example in Fig. 7, the plurality of frame units 610 includes five frame units 611, 613, 615, 617, and 619. In the case where it is not necessary to distinguish the five frame units from each other in particular, the frame units are simply referred to as the frame unit 610. Although illustrations are depicted in each of the plurality of frame units 610, illustrations are depicted only in the first frame unit 611 and the second frame unit 613 for convenience of description, and illustrations of the third frame unit 615, the fourth frame unit 617, and the fifth frame unit 619 are omitted.

Usually, the illustration is displayed in color or gray scale, however, if processing for identifying each frame is performed in the displayed state, the load on the information processing device becomes large because the amount of information to be handled is large. Therefore, to reduce the amount of information handled by the information processing device, binarization of the image data is performed. In the case of the example shown in Fig. 7, the body parts of characters 631 and 633 and the background of the second frame unit 613 are displayed in gray scale. By binarizing the image data shown in Fig. 7, as shown in Fig. 8, the color information or gray scale information is simplified, and only the outline of each part of the character (e.g., the joint between the body and head part of the character) and an outline of the frame are displayed in black, and the remaining areas are displayed in white.

As described above, in a case where it is not necessary to consider the load of the information processing device, this binarization processing can be omitted.

As shown in Fig. 7 and Fig. 8, in this example, a part of the outline of the second frame unit 613 has a chipped portion 635, and the outline of the frame is discontinuous. As a result, the interior of the second frame unit 613 is not separated from the margin unit 620, and both are continuous.

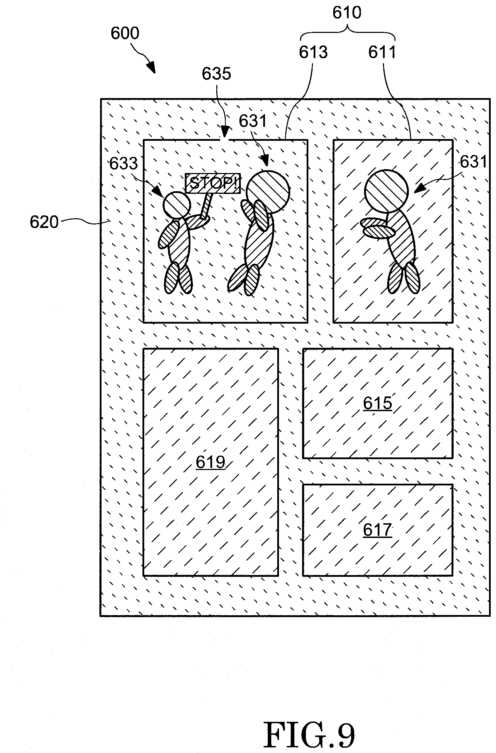

Following the step S541 in Fig. 6, the binarized image data is divided into a plurality of areas (step S542). Specifically, the first labeling process is performed on the binarized image data. In the first labeling process, since the pixels displaying the same color are divided for each continuous area, in the case where adjacent white areas are separated by a black line as described above, the adjacent white areas are recognized as a different area. That is, as shown in Fig. 8, for example, although the background of the first frame unit 611 and the characters 631 and 633 are white areas, respectively, they are separated by black lines. Therefore, as shown in Fig. 9, these areas are recognized as different areas and are divided into a plurality of different areas. In Fig. 9, the continuous areas displayed by the same hatching are recognized as the same area.

On the other hand, as shown in Fig. 8, the outline of the second frame unit 613 has the chipped portion 635, and the inside of the second frame unit 613 and the margin unit 620 are continuous. Therefore, as shown in Fig. 9, the inside of the second frame unit 613 and the margin unit 620 are recognized as one area.

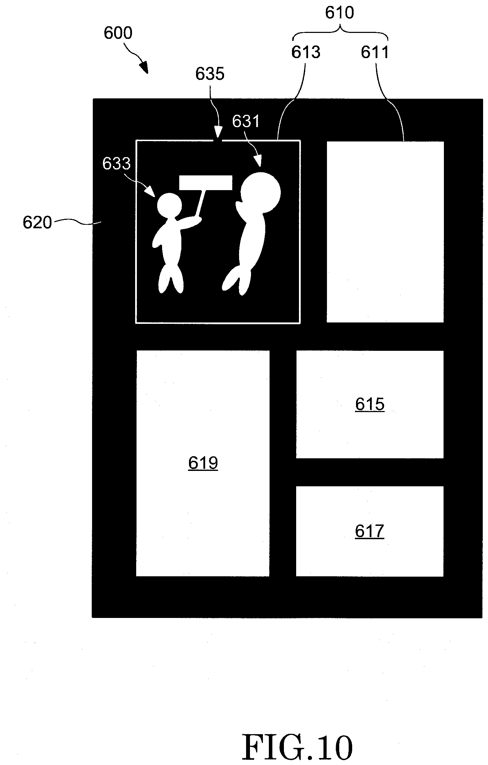

Following step S542 in Fig. 6, a margin is identified based on the divided area (step S543). In this case, an area with the largest area among the divided plurality of areas is identified as the margin. There may be a case where the area of one frame is larger than the area of the margin. However, since illustrations are drawn in the frame, the illustrations are also divided into a plurality of areas. Therefore, the area of the margin among the divided plurality of areas is often the largest. Fig. 10 is a diagram showing an area identified as the margin in black and the other area in white. As shown in Fig. 10, the first frame unit 611 is identified as an area other than a margin including the inner character 631.

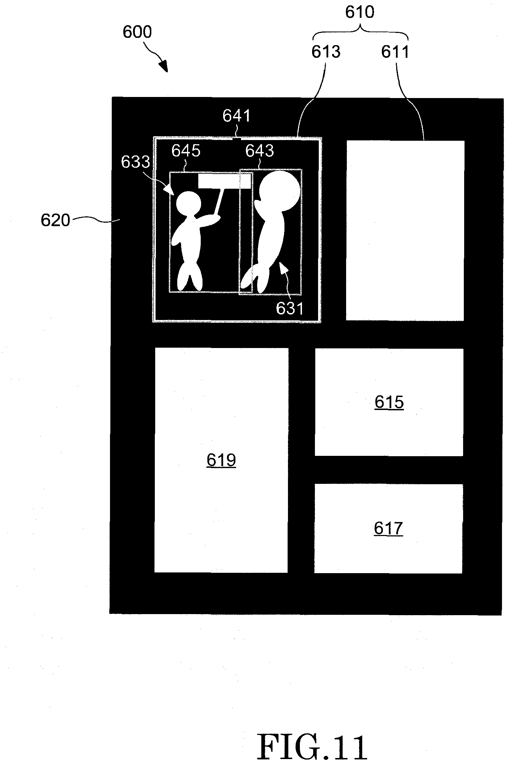

On the other hand, as in the second frame unit 613 shown in Fig. 10, there is the case where the inside of the second frame unit 613 and the margin unit 620 are recognized as one area, and the frame cannot be normally identified. In order to solve the abnormal frame identification described above, the margin and the frame identified in the above-described process are validated after step S543 in Fig. 6 (steps S544, S545). Specifically, the second labeling process is performed on the image data in which the margin and the frame are identified by the above process. In the second labeling process in this example, a rectangular area in which each of the divided plurality of areas is surrounded by a rectangle is recognized as one frame candidate, and the position of each frame candidate is identified. Specifically, as shown in Fig. 11, a first frame candidate 641 surrounding the frame of the second frame unit 613, a second frame candidate 643 surrounding the character 631, and a third frame candidate 645 surrounding the character 633 are recognized as frame candidates by the second labeling process.

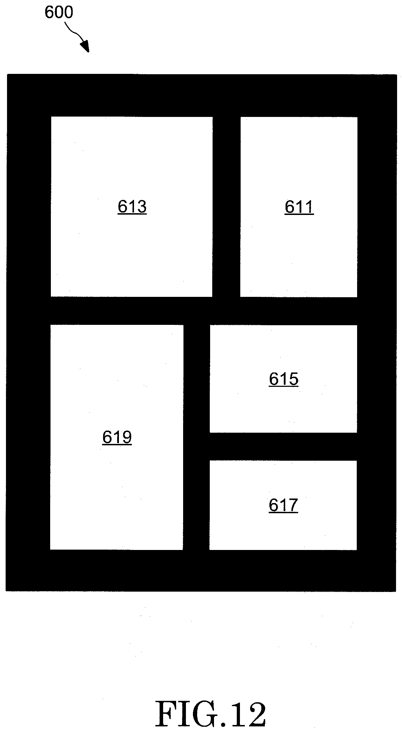

Following the second labeling process of step S544, the frame candidates recognized by the process (the first frame candidate 641, the second frame candidate 643, and the third frame candidate 645) are integrated (step S545). That is, in the case where the frame candidates overlap, and in the case where one frame candidate exists inside the other frame candidate, these frame candidates are integrated and identified as one frame. In the integration process of this example, since a part of the second frame candidate 643 and a part of the third frame candidate 645 overlap each other, both are integrated. Since the second frame candidate 643 and the third frame candidate 645 exist inside the first frame candidate 641, they are integrated with the first frame candidate 641. In this manner, as shown in Fig. 12, the second frame unit 613 is identified as one frame.

By identifying the margin unit 620 as a margin in the above method, the plurality of frame units 610 (frame units 611, 615, 617, and 619) other than the margin and the area (the frame unit 613) in which the characters 631 and 633 are drawn in the frame unit 610 can be identified as a frame. Further, by identifying the position of each frame candidate and performing integration processing, even when an abnormal frame identification occurs in the above processing, it is possible to correctly identify each frame unit 610 as a frame.

Following the identification of the frames in step S541 to step S545, a determination of the frame order is performed (step S546). As shown in Fig. 13, the method of determining the frame order is performed by a frame detection means 650 having a bar shape. The bar-shaped frame detection means 650 has a constant width in the vertical direction. The frame detection means 650 extends horizontally from the right end to the left end of the image data 600. In the case where the frame detection means 650 and each frame unit 610 overlap (collide), that is, in the case where the frame unit 610 overlapping with the frame detection means 650 is detected, it is determined that the frame unit 610 is a frame unit whose order is to be determined. When the frame detection means 650 extends from the right end to the left end in the image data 600, in the case where there is the plurality of frame units 610 overlapping with the frame detection means 650, it is determined that the other frame unit (the second frame unit 613) exists in the horizontal direction of one frame unit (the first frame unit 611). In the case where the first frame unit 611 is detected by the frame detection means 650, a tentative order (A) is given to the first frame unit 611.

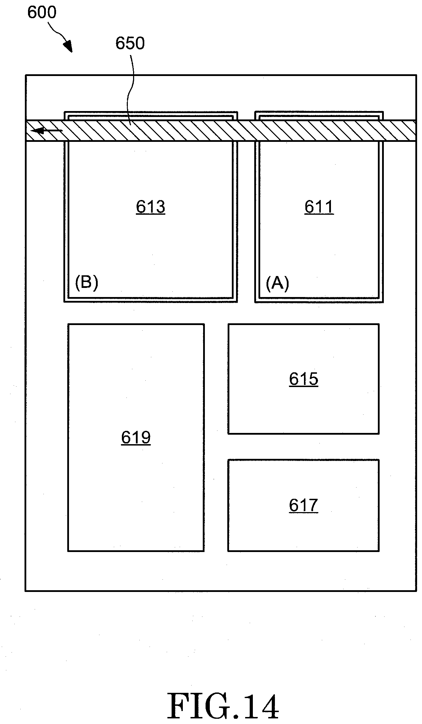

In the state shown in Fig. 13, since the frame detection means 650 overlaps with only the first frame unit 611, only the presence of the first frame unit 611 in the horizontal direction in which the frame detection means 650 extends is recognized. In the case where the frame detection means 650 further extends from the state shown in Fig. 13, the frame detection means 650 overlaps both the first frame unit 611 and the second frame unit 613. When the frame detection means 650 reaches the left end in the image data 600 as shown in Fig. 14, it is determined that these two frame units are present within the area in the vertical direction where the frame detection means 650 is present. In the case where the second frame unit 613 is detected by the frame detection means 650, a tentative order (B) is given to the second frame unit 613. As described above, when the frame detection means 650 reaches the left end of the image data 600, the frame detection means 650 moves to the position below the width of the frame detection means 650 in the vertical direction, and the frame detection means 650 performs the same process as above while extending from the right end to the left end.

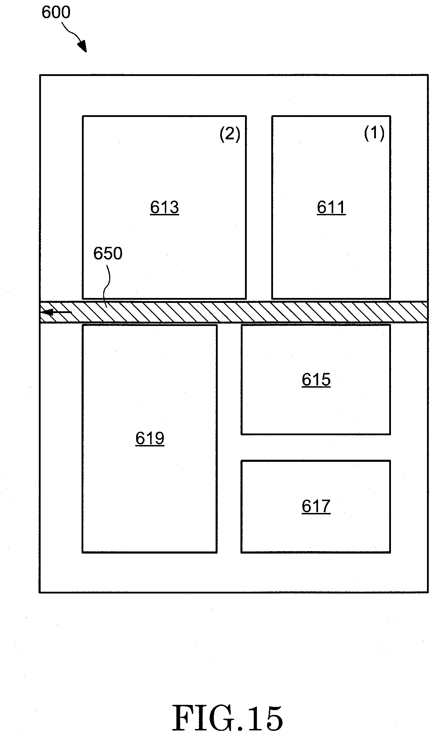

The frame detection means 650 repeats the above operation, and when the frame detection means 650 does not overlap both the first frame unit 611 and the second frame unit 613 as shown in Fig. 15, it is determined that the frame detection means 650 has exceeded the lower end of these frame units. Then, based on the tentative orders (A) and (B), the order of the first frame unit 611 is determined to be the first (1), and the order of the second frame unit 613 is determined to be the second (2). That is, in the case where it is determined that the first frame unit 611 exists on the right side of the second frame unit 613, and it is determined that no other frame unit exists on the right side of the first frame unit 611, the order of the first frame unit 611 is determined to be earlier than the order of the second frame unit 613, and the order of the first frame unit 611 is determined to be the first order. In other words, in the case where the frame detection means 650 overlaps with only the margin unit 620 in a state of reaching the left end of the image data 600, the order is determined for the frame unit that exists above the frame detection means 650 in that state and whose order has not yet been determined.

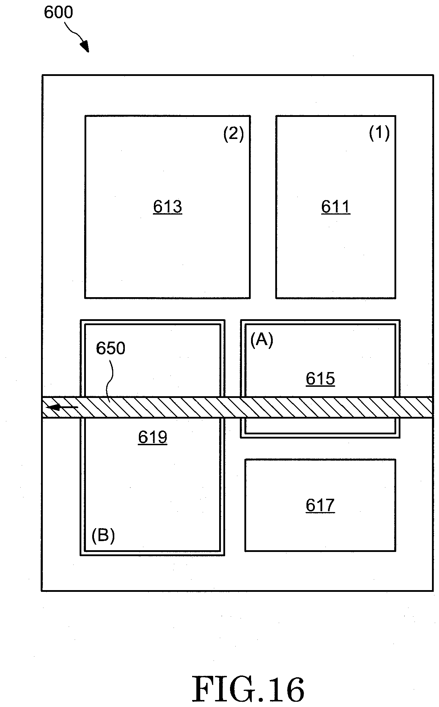

Next, in the state shown in Fig. 16, since the frame detection means 650 overlaps the third frame unit 615 and the fifth frame unit 619, the tentative order of the third frame unit 615 is determined to be (A), and the tentative order of the fifth frame unit 619 is determined to be (B). In this state, since the frame detection means 650 has not yet reached the fourth frame unit 617, the presence of the fourth frame unit 617 is not recognized.

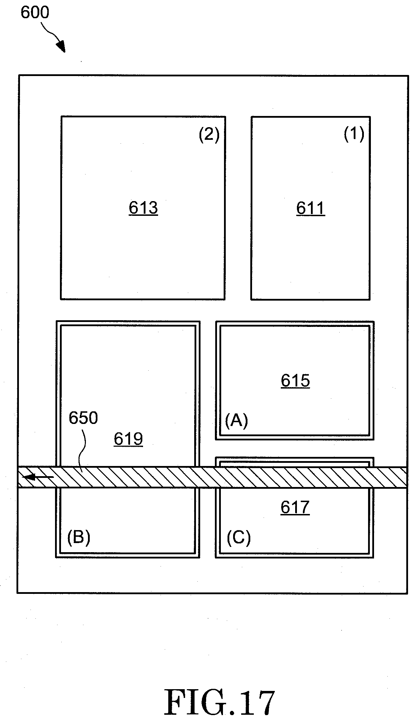

The frame detection means 650 repeats the above operation, as shown in Fig. 17, and when the frame detection means 650 no longer overlaps with the third frame unit 615, it is determined that the frame detection means 650 has exceeded the lower end of the third frame unit 615. However, since the frame detection means 650 does not exceed the lower end of the fifth frame unit 619, the order of the frame units is not yet determined. In the state in Fig. 17, since the frame detection means 650 overlaps with the fourth frame unit 617, the presence of the fourth frame unit 617 is recognized, and the tentative order of the fourth frame unit 617 is determined to be (C).

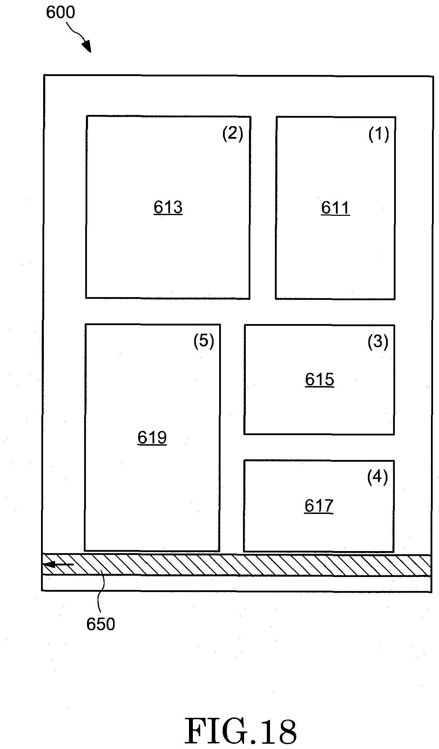

The frame detection means 650 repeats the above operation, and when the frame detection means 650 no longer overlaps with both the fourth frame unit 617 and the fifth frame unit 619 as shown in Fig. 18, it is determined that the frame detection means 650 has exceeded the lower end of these frame units. In this state, the third frame unit 615 and the fourth frame unit 617 exist on the right side of the fifth frame unit 619. Therefore, the order of the third frame unit 615 and the fourth frame unit 617 is determined to be earlier than the order of the fifth frame unit 619. Since the third frame unit 615 exists above the fourth frame unit 617, the order of the third frame unit 615 is determined to be earlier than the order of the fourth frame unit 617. Further, since no other frame unit exists on the right side of the third frame unit 615, the order of the third frame unit 615 is determined to be the first order (third order) among the frame units whose order has not yet been determined. That is, the tentative order (A) is determined to be the third (3), the tentative order (C) is determined to be the fourth (4), and the tentative order (B) is determined to be the fifth (5).

The above method is a method of determining the frame order to be assigned to a comic of the type in which a page is turned from left to right. In the case where the above method is applied to a comic of the type in which a page is turned from right to left, a reverse process from right and left from the above description is performed. That is, in this case, the frame detection means 650 extends from the left end to the right end in the image data 600, and when there is a plurality of frame units in the horizontal direction, the left frame unit is determined in the order earlier than the right frame unit.

According to the above method, the order of each frame unit can be determined in the order that a reader naturally recognizes when reading a comic. The order of each frame unit determined as described above is stored in the database 102 (see Fig. 1) connected to the electronic book provision server 100 together with the information identifying the position of the frame. As shown in Fig. 19, a data table 101 is stored in the database 102. The data table 101 includes a frame ID 103, comic information 104, page information 105, frame coordinates 106, a frame size 107, and a frame order 108. These information are associated with each other. The information included in the data table 101 may be only a part of the information shown in Fig. 19, or may include information other than these pieces of information.

The frame ID 103 is an ID that identifies the target frame to which the order has been assigned. The comic information 104 is an electronic comic that includes the target frame and information for identifying the electronic comic corresponds to one independent book. The page information 105 is information that identifies the page on which the target frame is drawn. The frame coordinates 106 are information that identifies the coordinates (horizontal direction: x, vertical direction: y) of the frame in the page on which the target frame is drawn. The frame coordinates 106 may be coordinates of the upper right corner of the rectangle when the frame is a rectangle, or may be coordinates of the center of the frame. The frame coordinates 106 can identify the coordinates when the frame detection means 650 firstly overlaps the target frame unit as the upper right corner of the rectangle. The frame size 107 is information that identifies the horizontal size (Δx) and the vertical size (Δy) of the target frame. The frame size 107 can be calculated based on the area that the frame detection unit 650 overlaps the target frame. The frame order 108 is the order assigned to the target frame in each page. Instead of the frame size 107, the coordinates of the four corners of the frame or the coordinates of the diagonal of the frame may be included in the data table 101.

As described above, in the case where the identification unit 150 has the function of converting the lines in the frame into character data and the function of identifying the character (dramatis personae) in the frame, the character data (based on the lines) and the information on the character (dramatis personae) may be associated with each frame. Although Fig. 19 exemplifies a configuration in which the frame order is assigned for each page, the present invention is not limited to this configuration. For example, a serial order may be assigned to frames of all pages of one comic, or a serial number may be assigned to frames every few pages, such as chapters. In this case, the following interface may include items that instruct the method of assigning the frame order. In the case where the frame identification (S511 in Fig. 5A and Fig. 5B) and the determination of the frame order (S512) are performed after the display format instruction (S522), the data table 101 as shown in Fig. 19 may be omitted.

### [Display method of frame]

Referring to Fig. 20 to Fig. 23, an example of an interface provided to the first communication terminal 200 in step S514 in Fig. 5A and Fig. 5B and an example of a comic displaying format provided to the first communication terminal 200 in step S516 will be described.

Fig. 20 is a diagram showing an example of an interface configured to accept an instruction of a display format from a user who browses an electronic comic in the electronic book provision system according to an embodiment of the present invention. As shown in Fig. 20, a display format instruction field 710, a display frame number instruction field 720, a width/height automatic adjustment instruction field 730, and a determination button 740 are displayed on an interface 700. The items displayed on the interface 700 shown in Fig. 20 are examples, and only some of these items may be displayed, or items other than these items may be displayed.

The display format instruction field 710 is an item for instructing what format each frame included in the electronic comic is to be displayed on the first communication terminal 200. In Fig. 20, instruction buttons of "original", "vertical reading", and "horizontal reading" are displayed in the display format instruction field 710. The "original" is a button that instructs to display in a format of original image data in which the position of the frame is not organized. The "vertical reading" is a button that instructs to display in a format in which the frames are arranged in the vertical direction based on the page information 105 and the frame order 108 (see Fig. 19). The "horizontal reading" is a button that instructs to display in a format in which the frames are arranged in the horizontal direction based on the page information 105 and the frame order 108.

The display frame number instruction field 720 is an item for instructing the number of frames to be displayed on the display of the first communication terminal 200 in the case where "vertical reading" or "horizontal reading" is instructed in the display format instruction field 710. Although Fig. 20 exemplifies a configuration in which a selecting unit 721 for selecting the number of frames to be displayed on the display by a pull-down method is provided in the display frame number instruction field 720, an embodiment of the present invention is not limited to this configuration. For example, an input field capable of directly input of the number of display frames may be provided as the display frame number instruction field 720, or a slide bar capable of setting the number of display frames may be provided. It is possible to display each frame by the size of the original image data by selecting the instruction button "Not set".

The width/height automatic adjustment instruction field 730 is an item for enabling "ON" or disabling "OFF" the function of automatically adjusting the height or width of a frame based on the size of the display of the first communication terminal 200 and the size of each frame when "vertical reading" or "horizontal reading" is instructed in the display format instruction field 710. For example, in the case where "vertical reading" is instructed, the width (size in the horizontal direction) of the frame is adjusted based on the horizontal width H (see Fig. 3) of the display. On the other hand, in the case where "horizontal reading" is instructed, the height of the frame (size in the vertical direction) is adjusted based on the vertical height V (see Fig. 3) of the display. In other words, the width/height automatic adjustment instruction field 730 organizes the arrangement of the frames based on the terminal data of the first communication terminal 200.

In the case where "vertical reading" is instructed, the width of the frame may be adjusted based on the vertical height V and the height of the frame of the display in addition to the above. In the case where "horizontal reading" is instructed, the height of the frame may be adjusted based on the horizontal width H of the display and the width of the frame in addition to the above. As a result, even if the aspect ratio of the frame (the ratio of the height of the frame to the width of the frame) is larger than the aspect ratio of the display (the ratio of the vertical height V to the horizontal width H of the display), it is possible to suppress a part of the illustration of the frame from protruding from the display.

The determination button 740 is a button for confirming the instruction content selected or input in the display format instruction field 710, the display frame number instruction field 720, and the width/height automatic adjustment instruction field 730, and transmitting a signal including the instruction contents to the electronic book provision server 100.

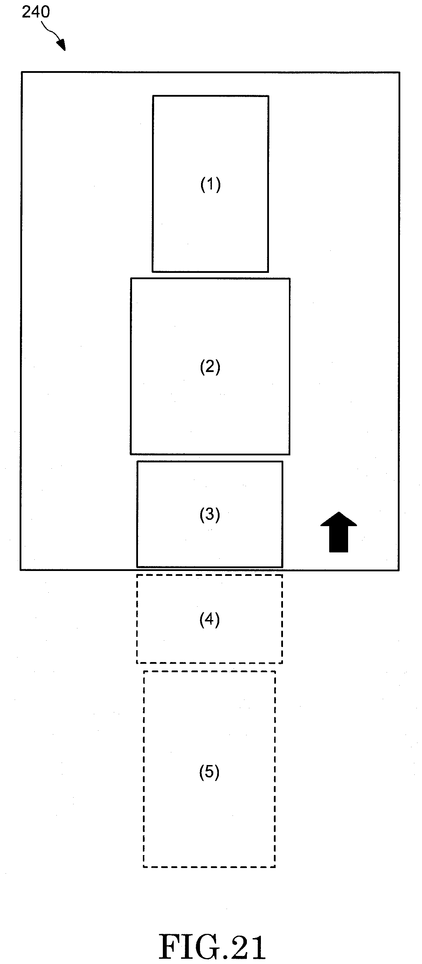

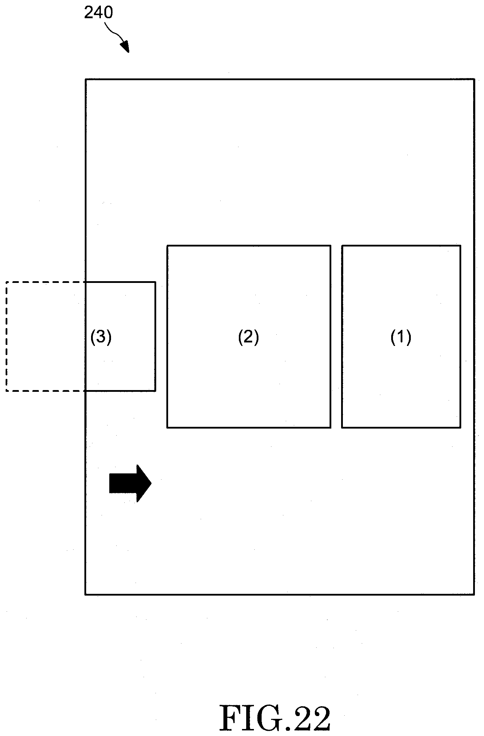

Fig. 21 and Fig. 22 are diagrams showing an example of displaying a frame in a display format instructed by a user in the electronic book provision system according to an embodiment of the present invention. In the case where "vertical reading" is instructed in the display format instruction field 710, based on the page information 105 and the frame order 108 (see Fig. 19), the frames are arranged in the vertical direction and displayed on the display 240 as shown in Fig. 21. On the other hand, in the case where "horizontal reading" is instructed in the display format instruction field 710, based on the page information 105 and the frame order 108, the frames are arranged in the horizontal direction and displayed on the display 240 as shown in Fig. 22.

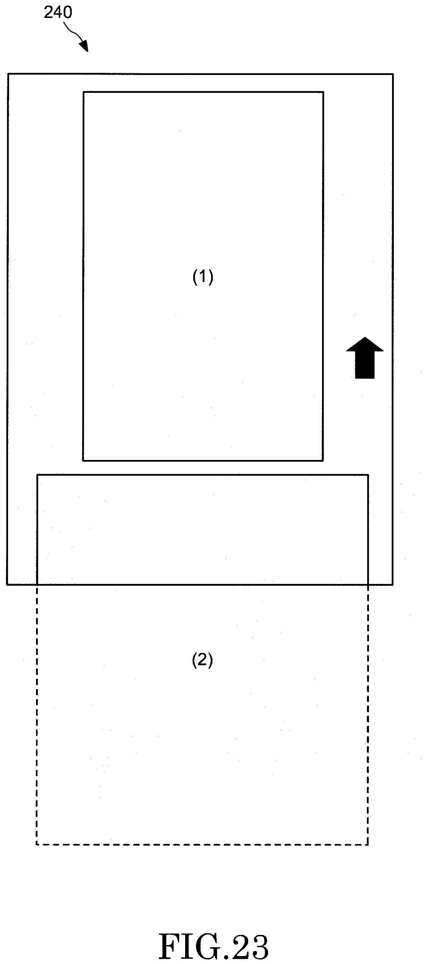

Fig. 23 is a diagram showing an example of displaying a frame in a display format instructed by a user in the electronic book provision system according to an embodiment of the present invention. The example shown in Fig. 23 is a display example when "vertical reading" is instructed in the display format instruction field 710 and "ON" is instructed in the width/height automatic adjustment instruction field 730. Compared with Fig. 21, the first and second frames are displayed in an enlarged manner. In the example in Fig. 21, since the width of the second frame is larger than the width of the first frame, the magnification of the first and second frames is adjusted based on the width of the second frame and the horizontal width H of the display. However, the first frame and the second frame may be adjusted at different magnifications.

In Fig. 21 to Fig. 23, although configurations in which each frame is displayed in a state where the display 240 is in a vertical orientation (a state in which the longitudinal side of the display is along the vertical direction), the display 240 may also be in a horizontal orientation (a state in which the longitudinal side of the display is along the horizontal orientation). Even when the display 240 is oriented horizontally, each frame is displayed in the same orientation as in Fig. 21 to Fig. 23.

As described above, according to the electronic book provision system 10 of the present embodiment, the electronic book provision server 100 divides the original image data into frames and determines the order of the original image data, and organizes the arrangement of the frames based on the instruction of the first communication terminal 200. Accordingly, the electronic book provision server 100 can adjust the display format of the electronic comic according to the user's preference and a usage pattern using the first communication terminal 200.

### <Second embodiment

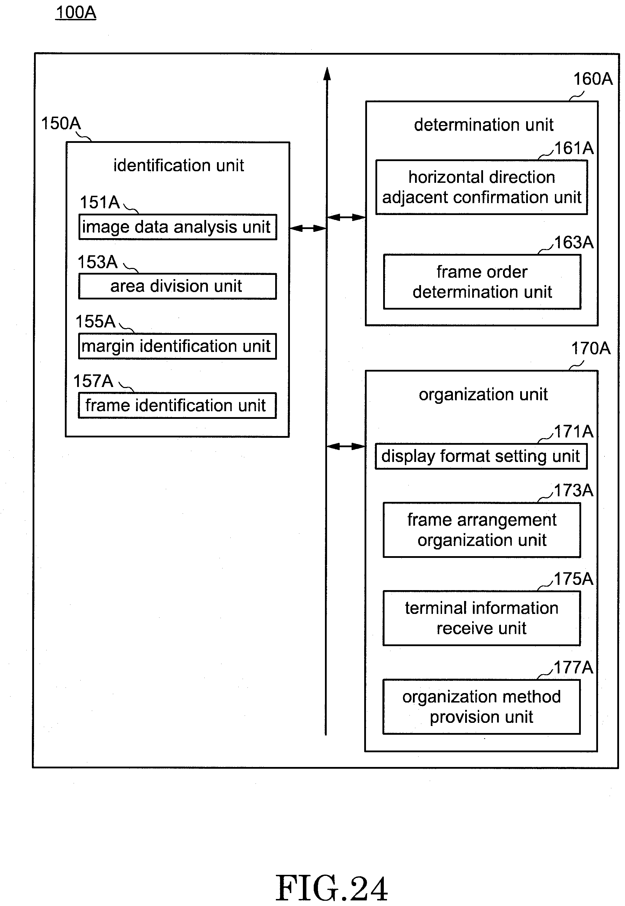

An electronic book provision system 10A according to the second embodiment will be described with reference to Fig. 24 to Fig. 26. The electronic book provision system 10A shown in Fig. 24 to Fig. 26 is similar to the electronic book provision system 10 shown in Fig. 1 to Fig. 23. However, a function of an electronic book provision server 100A included in the electronic book provision system 10A is different from the function of the electronic book provision server 100 (see Fig. 4). In the following description of the embodiment, the description of the same configuration as that of the first embodiment is omitted, and the difference between the first embodiment and the second embodiment will be described.

Fig. 24 is a schematic view showing a functional configuration of a server used in the electronic book provision system according to an embodiment of the present invention. As shown in Fig. 24, an organization unit 170A of the electronic book provision server 100A has a terminal information receive unit 175A and an organization method provision unit 177A in addition to the function of the organization unit 170 in Fig. 4.

The terminal information receive unit 175A receives terminal information (e.g., the vertical height V and the horizontal width H) relating to a display function such as a display size of a first communication terminal 200A when a request for browsing an electronic comic is received from the first communication terminal 200A, for example. The terminal information may be input or selected by the first communication terminal 200A, and may be estimated based on the user agent and the like. The terminal information receive unit 175A receives, in addition to the terminal information, organizer information (for example, name, sex, age, and country of residence of the organizer, and the user ID and nickname in the service provided by the electronic book provision system 10A), country name in which the first communication terminal 200A uses the service, and the date and time that the service is used by the first communication terminal 200A).

Based on the information received by the terminal information receive unit 175A, the organization method provision unit 177A proposes a display format (a method for organizing the arrangement of frames) recommended to the user who uses the first communication terminal 200A. For example, based on the type of the electronic comic and the display size of the first communication terminal 200A, a display format suitable for the condition or a display format selected by many users in the case of the condition is proposed.

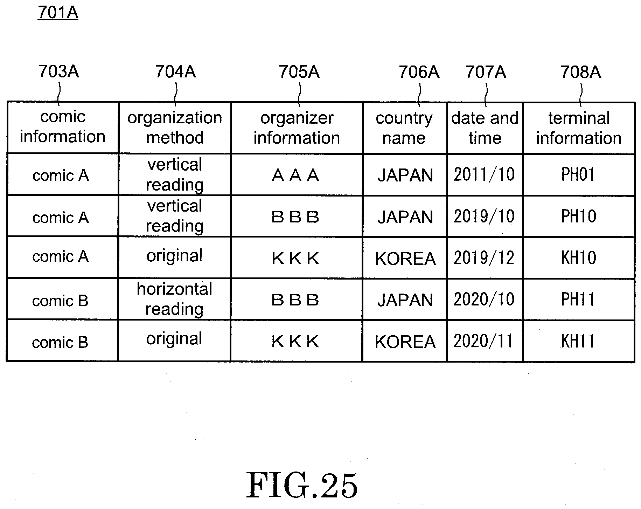

Fig. 25 is a diagram showing an example of data stored in a database in the electronic book provision system according to an embodiment of the present invention. A data table 701A shown in Fig. 25 includes information received from the first communication terminal 200A by the terminal information receive unit 175A. Further, the information included in the data table 701A in Fig. 25 is information used by the organization method provision unit 177A to propose an appropriate display format to the user who uses the first communication terminal 200A.

As shown in Fig. 25, the data table 701A includes comic information 703A, an organization method 704A, organizer information 705A, a country name 706A, an organization date and time 707A, and terminal information 708A. These information are associated with each other. The information included in the data table 701A may be only a part of the information shown in Fig. 25, or may include other information.

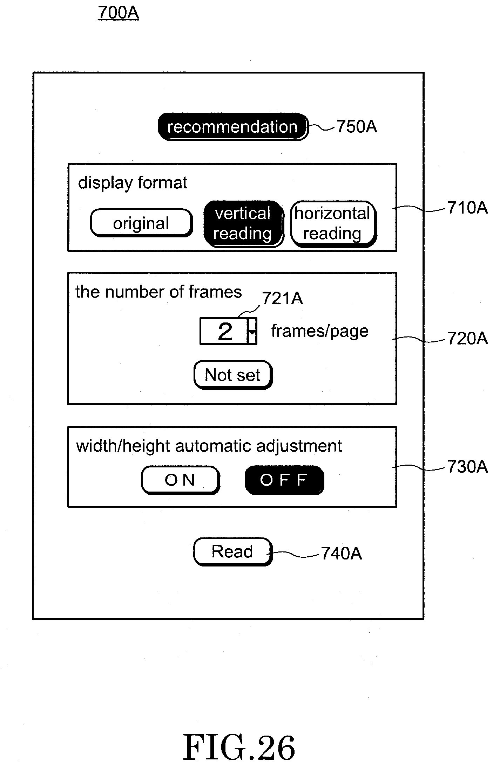

The comic information 703A is the same item as the comic information 104 in Fig. 19. The organization method 704A is the display format (display format, number of display frames, and width/height automatic adjustment in Fig. 26) of the electronic comic instructed by the first communication terminal 200A. The organizer information 705A is, for example, information such as name, sex, age, and country of residence of the user who instructed the organizing of the electronic comic using the first communication terminal 200A, and the user ID and nickname in the service provided by the electronic book provision system 10A. However, the organizer information 705A does not need to include all of this information, and may include other information. The country name 706A is the name of the country with which the first communication terminal 200A, which has instructed the display format of the electronic comic, communicated. The organization date and time 707A is the date and time when the first communication terminal 200A instructs the display format of the electronic comic. The terminal information 708A is the vertical height V and the horizontal width H of the display of the first communication terminal 200A, or other information that can identify these.

Fig. 26 is a diagram showing an example of an interface for suggesting a display format to a user who browses an electronic comic in the electronic book provision system according to an embodiment of the present invention. The interface shown in Fig. 26 is, for example, an interface provided to the first communication terminal 200A in step S514 in Fig. 5A and Fig. 5B. As shown in Fig. 26, an interface 700A displays a recommendation button 750A in addition to the items displayed on the interface 700 in Fig. 20. The state shown in Fig. 26 is a state in which the recommendation button 750A is enabled (white character on a black background). When the recommendation button 750A is enabled, the organization method provision unit 177A in Fig. 24 proposes, for example, the most frequently adopted display format for the target comic, based on the data table 701A. In Fig. 26, settings of "vertical reading" for the display format, "2 frames/page" for the number of display frames, and "off" for the width/height automatic adjustment are proposed by enabling the recommendation button 750A.

As described above, according to the electronic book provision system of the present embodiment, in addition to the same effects as those of the first embodiment, it is possible to propose a recommended display format of a target electronic comic to a user using the first communication terminal 200A. This configuration can improve user convenience.

### <Third embodiment

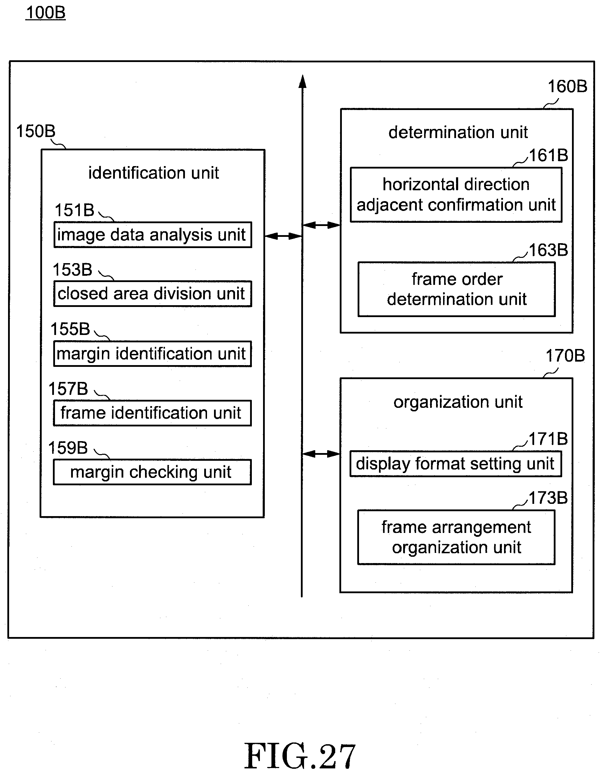

An electronic book provision system 10B according to the third embodiment will be described with reference to Fig. 27 to Fig. 31. The electronic book provision system 10B shown in Fig. 27 to Fig. 31 is similar to the electronic book provision system 10 shown in Fig. 1 to Fig. 23. However, a function of an electronic book provision server 100B included in the electronic book provision system 10B is different from the function of the electronic book provision server 100 (see Fig. 4). In the following description of the embodiment, the description of the same configuration as that of the first embodiment is omitted, and the difference between the first embodiment and the third embodiment will be described.

Fig. 27 is a schematic view showing a functional configuration of a server used in the electronic book provision system according to an embodiment of the present invention. As shown in Fig. 27, an identification unit 150B of the electronic book provision server 100B has a margin checking unit 159B in addition to the function of the identification unit 150 in Fig. 4.

The margin checking unit 159B checks whether there is an area to be identified as a frame in the area identified as a margin with respect to the image data in which the margin and the frame are identified by a margin identification unit 155B and a frame identification unit 157B. As shown in the first embodiment, although the margin identification and the frame identification are performed, there is a case that the area which should be originally identified as the frame is identified as the margin. For example, such problems may arise for illustrations drawn in an area where no frame exists or the frame cannot be detected. However, since illustrations are drawn in such an area, the size of the area erroneously identified as the margin is greater than or equal to a predetermined size. In other words, the size of the area is so large that it is unlikely to be a margin. Hereinafter, this predetermined size is referred to as a "frame certified size".

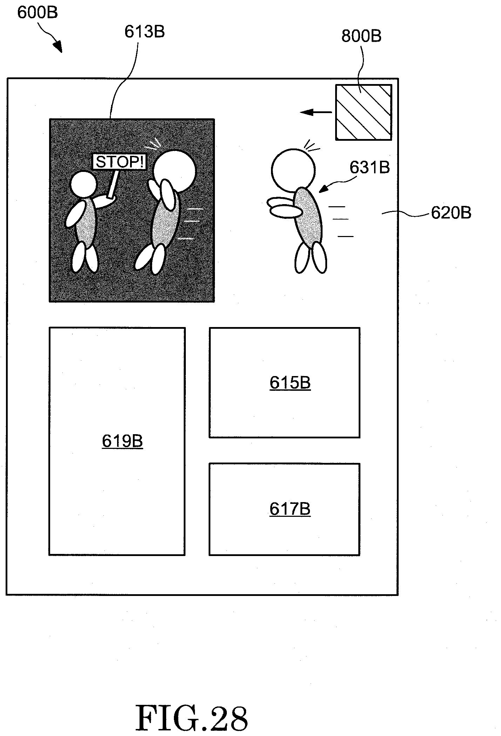

The function of the margin checking unit 159B will be described with reference to Fig. 28 to Fig. 31. Fig. 28 to Fig. 31 are diagrams for explaining a method of identifying a part of a margin as a frame in the electronic book provision system according to an embodiment of the present invention.

First, as shown in Fig. 28, a check is made as to whether a margin checking space 800B of the frame-certified size exists in a margin unit 620B. The presence of the margin checking space 800B in the margin unit 620B means that there is a space that is so large that the margin unit 620B is unlikely to be considered as a margin. In the case where the margin checking space 800B exists in the margin unit 620B, as shown in Fig. 28, a checking area 810B of the margin checking space 800B is extended in the horizontal direction (left direction) from the upper right corner of the margin unit 620B.

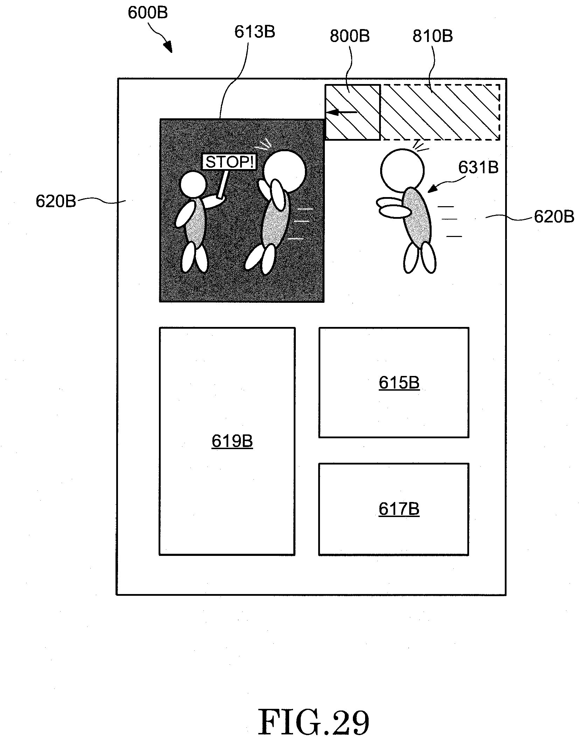

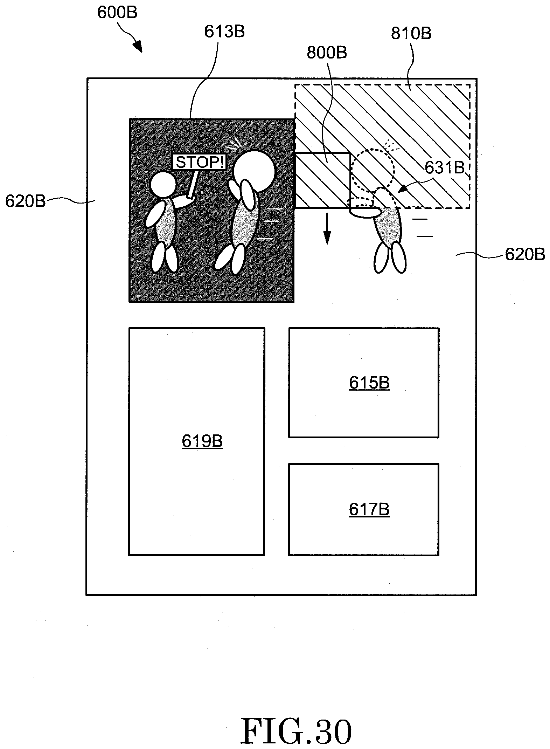

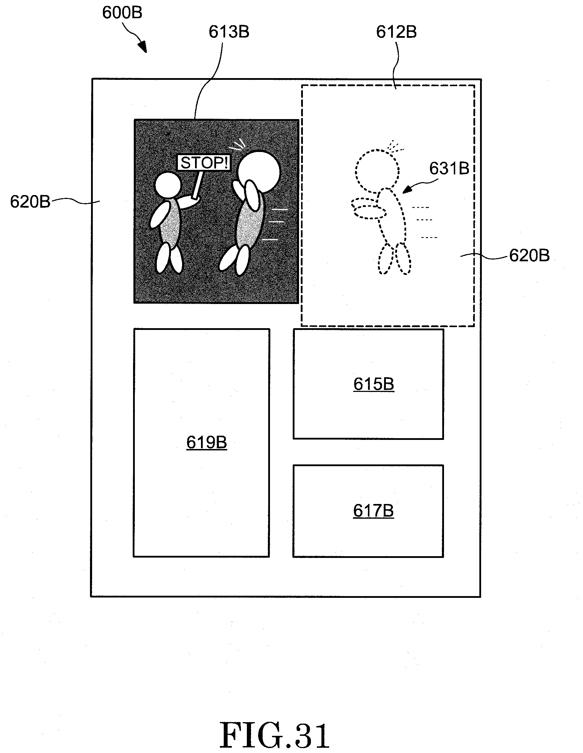

As shown in Fig. 29, the checking area 810B of the margin checking space 800B extends in the left direction until it reaches a second frame unit 613B. The extension in the left direction of the checking area 810B stops when it reaches the second frame unit 613B, and thereafter the checking area 810B extends in the vertical direction (downward) until it reaches a third frame unit 615B (see Fig. 30). The downward extension of the checking area 810B stops when it reaches the third frame unit 615B. As shown in Fig. 31, the space surrounded by the checking area 810B in this state is identified as the sixth frame unit 612B.

The checking of the margin checking space 800B may be performed using the frame detection means 650 described in the first embodiment, or may be performed using a detection means of a size corresponding to the margin checking space 800B. In the case where the margin checking space 800B is checked by using the frame detection means 650, the checking is performed by determining whether the detected margin has an area equal to or larger than the frame certified size. For example, the presence of the margin checking space 800B can be examined based on an area in which a tip of the frame detection means 650 passes through the margin 620B. In the case where the margin checking space 800B is checked by using the detection means of a size corresponding to the margin checking space 800B, as shown in Fig. 28, a check is made as to whether a space in which a frame of the same size as the margin checking space 800B can be arranged exists in the margin unit 620B.

The frame certified size can certificate the size of the smallest frame (minimum frame size) among all frames identified in one electronic comic as the frame certified size. Alternatively, a size 1/5 of the size of one page may be certified as the frame certified size. Alternatively, a 100 × 100 pixel area may be certified as the frame certified size. However, the frame certified size is not limited to this size and can be appropriately set between 50 × 50 pixels to 500 × 500 pixels.

The checking of the area identified as the margin by the margin checking unit 159B may be performed separately from the determination of the order of each frame by a determination unit 160B, or may be performed simultaneously with the determination of the order of each frame. In the former case, the processing in Fig. 28 to Fig. 31 is performed before the processing shown in Fig. 13 to Fig. 18 is performed. In the latter case, determining whether a space of the frame certified size (for example, 100 × 100 pixels) exists in the margin while performing the processing shown in Fig. 13 to Fig. 18 can also serve as the processing in Fig. 28 to Fig. 31.

As described above, according to the electronic book provision system of the present embodiment, in addition to the same effects as those of the first embodiment, it is possible to reduce the risk of erroneously identifying a frame as a margin. Furthermore, even if an illustration exists in an area without a frame, such an illustration can be identified as a frame.

<Fourth embodiment

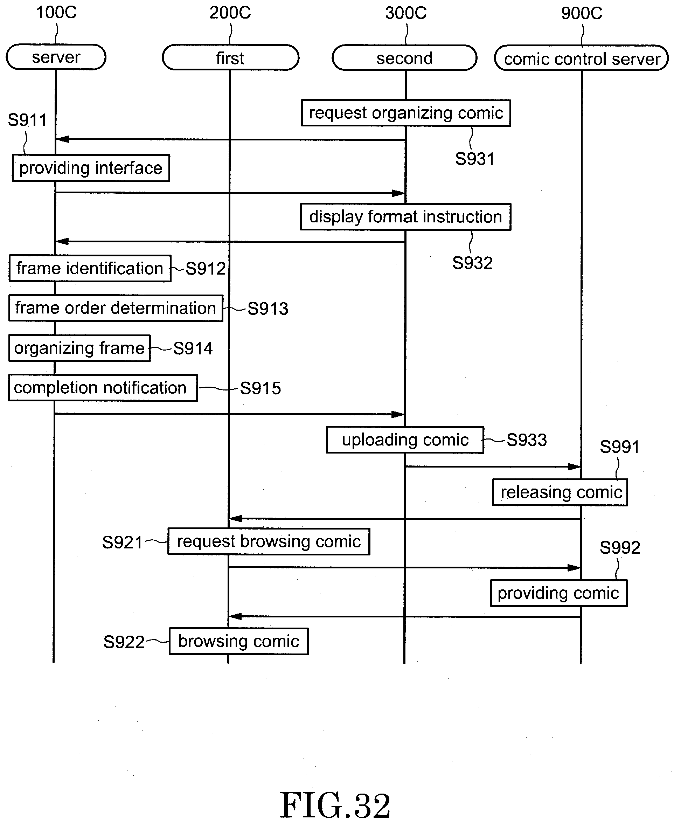

An electronic book provision system 10C according to the fourth embodiment will be described with reference to Fig. 32. The electronic book provision system 10C shown in Fig. 32 is similar to the electronic book provision system 10 shown in Fig. 1 to Fig. 23. However, the electronic book provision system 10C differs from the electronic book provision system 10 in that a second communication terminal 300C for registering electronic comics instructs a display format and that a server for providing electronic comics is a server that differs from the server for organizing frames. In the following description of the embodiment, the description of the same configuration as that of the first embodiment is omitted, and the difference between the two will be described.

Fig. 32 is a flowchart showing an operation of the electronic book provision system according to an embodiment of the present invention. As shown in Fig. 32, first, the second communication terminal server 300C requests an electronic book provision server 100C to organize an electronic comic (step S931). In response to the organization request of the electronic comic in step S931, the electronic book provision server 100C provides an interface to the second communication terminal 300C (step S911). An interface similar to that described with reference to Fig. 20 can be used as this interface.

When the display format is instructed by the second communication terminal 300C (step S932), the electronic book provision server 100C performs the determination of the frame (step S912) and the frame order (step S913). Next, the frame is organized in accordance with the content instructed in step S932 (step S914). When the frame organization is completed, a notification that the frame is organized is sent to the second communication terminal 300C (step S915). The above process enables the second communication terminal 300C to obtain an electronic comic organized into a desired display format. The method described in the first embodiment can be used to identify the frames, determine the order of the frames, and organize the frames.

The second communication terminal 300C uploads the organized electronic comic to a comic control server 900C (step S933). The comic control server 900C publishes the uploaded electronic comic (step S991), and provides the electronic comic (step S992) in response to the browsing request (step S921) of the electronic comic from a first communication terminal 200C. The above process allows the first communication terminal 200C to browse the electronic comic organized by the second communication terminal 300C (step S922).

As described above, according to the electronic book provision system 10C of the present embodiment, for example, before a creator of a comic uploads an electronic comic to the comic control server 900C, the display format of the electronic comic can be organized.

In the above example, although a configuration in which a server that identifies a frame, determines an order of frames, and organizes the frames is different from a server that provides an electronic comic has been exemplified, these functions may be executed by one server. The above process may be performed on a computing device such as a personal computer, or a mobile communication terminal such as a smartphone, rather than a server.

While the present invention has been described with reference to the accompanying drawings, the present invention is not limited to the above embodiments, and can be appropriately modified without departing from the spirit of the present invention. For example, an electronic book provision system of the present embodiment to which a person skilled in the art adds, deletes, or changes the design of components as appropriate based on the electronic book provision system of the present embodiment is also included in the scope of the present invention as long as the gist of the present invention is provided. Furthermore, the embodiments described above can be appropriately combined as long as there is no mutual inconsistency, and technical matters common to the embodiments are included in the embodiments even if they are not explicitly described.

Even in the case of other working effects which differ from the working effect brought about by the mode of each above-mentioned embodiment, what is clear from the description in this description, or what can be easily predicted by the person skilled in the art is naturally understood to be brought about by the present invention.

### REFERENCE SIGNSLIST

10: electronic book provision system, 100: electronic book provision server, 101: data table, 102: database, 104: comic information, 105: page information, 106: frame coordinates, 107: frame size, 108: frame order, 110: server control unit, 120: server storage unit, 130: server communication unit, 150: identification unit, 151: image data analysis unit, 153: area division unit, 155: margin identification unit, 157: frame identification unit, 159B: margin checking unit, 160: determination unit, 161: horizontal direction adjacent confirmation unit, 163: frame order determination unit, 170: organization unit, 171: display format setting unit, 173: frame arrangement organization unit, 175A: terminal information receive unit, 177A: organization method provision unit, 200: first communication terminal, 210: terminal storage unit, 220: terminal control unit, 230: terminal communication unit, 240: display, 250: operation button, 260: camera, 270: speaker, 280: microphone, 300: second communication terminal, 400: network, 600: image data, 610: frame unit, 611: first frame unit, 612B: sixth frame unit, 613: second frame unit, 613B: second frame unit, 615: third frame unit, 617: fourth frame unit, 619: fifth frame unit, 620: margin unit, 631: character, 633: character, 641: first frame candidate, 643: second frame candidate, 645: third frame candidate, 650: frame detection means, 700: interface, 701A: data table, 703A: comic information, 704A: organization method, 705A: organizer information, 706A: country name, 707A: organization date and time, 708A: terminal information, 710: display format instruction frame, 720: display frame number instruction frame, 721: selecting unit, 730: automatic adjustment instruction frame, 740: determination button, 750A: recommendation button, 800B: margin checking frame, 810B: checking area, 900C: comic control server

## Claims

1. A server comprising:
an identification unit configured to identify each of a plurality of frames based on image data of a comic including the plurality of frames;
a determination unit configured to determine an order of the plurality of frames identified by the identification unit; and
an organization unit configured to organize an arrangement of the frames based on the order determined by the determination unit.

2. The server according to claim 1, wherein
the organization unit is configured to organize an arrangement of the frames based on an instruction signal configured to instruct a display format.

3. The server according to claim 2, wherein
the instruction signal includes a signal configured to instruct one display format from two or more of display formats selected from a group including a first display format configured to display an original of the image data, a second display format configured to display the frames in a vertical direction, and a third display format configured to display the frames in a horizontal direction.

4. The server according to claim 2, wherein
the instruction signal includes a signal configured to specify the number of frames displayed on a display of a terminal displaying the organized frames.

5. The server according to claim 2, wherein
the organization unit is configured to organize an arrangement of the frames based on terminal information of the terminal displaying the organized frames.

6. The server according to any one of claims 1 to 5, wherein
the identification unit is configured to
divide the image data into a plurality of areas in which pixels displaying the same color are continuous in each area of the plurality of areas,
identify a margin based on the plurality of areas, and
identify each frame of the plurality of frames based on the margin.

7. The server according to claim 6, wherein
the identification unit is configured to identify the largest area among the divided plurality of areas as the margin.

8. The server according to claim 6, wherein
the identification unit is configured to identify the area other than the margin as the frame.

9. The server according to claim 6, wherein
the identification unit is configured to binarize the image data, and divide the image data into the plurality of areas based on the binarized image data.

10. The server according to claim 6, wherein
the plurality of areas includes a first area and a second area, and
in the case where the first area exists inside the second area or the first area and the second area overlap, the identification unit is configured to integrate the first are and the second area into one area.

11. The server according to claim 6, wherein
in the case where a space larger than the size of the smallest frame among the plurality of frames identified by the identification unit is present in the margin, the identification unit is configured to identify the space as the frame.

12. The server according to claim 1, wherein
the plurality of frames include a first frame, and
the determination unit is configured to determine an order of the first frame in the plurality of frames based on the presence or absence of other frames adjacent to the first frame in the horizontal direction of the image data.

13. The server according to claim 12, wherein
the plurality of frames further include a second frame, and
in the case where the second frame exists in the horizontal direction of the first frame, the determination unit is configured to determine the order of the first frame in an order earlier than an order of the second frame.

14. The server according to claim 1, wherein
the organization unit is configured to display information to a user on an interface regarding whether the arrangement of the plurality of frames can be organized.

15. The server according to claim 1, wherein
the organization unit is configured to provide on an interface with a display format designated, prohibited, or recommended for each comic.

16. A program configured to be executed by a computer to:
identify each frame of a plurality of frames based on image data of a comic including the plurality of frames,
determine each order of the identified plurality of frames, and
organize an arrangement of the frames based on the determined order.

17. A method of organizing an arrangement of a plurality of frames comprising:
identifying each frame of the plurality of frames based on image data of a comic including the plurality of frames,
determining each order of the identified plurality of frames, and
organizing an arrangement of the frames based on the determined order.

18. A system comprising:
a server having an identification unit configured to identify each of a plurality of frames based on first image data of a comic including the plurality of frames, a determination unit configured to determine an order of each of the plurality of frames identified by the identification unit, an organization unit configured to organize an arrangement of the frames based on the order determined by the determination unit, and
a communication terminal configured to receive second image data of each of the plurality of frames from the server and display the frames in an arrangement organized by the organization unit.

19. The system according to claim 18, wherein
the server is configured to organize the arrangement of the frames based on a display format instructed by the communication terminal.

20. The system according to claim 18 or 19, wherein
the server is configured to receive terminal information of the communication terminal and provide a method of organizing the arrangement of the frames based on the terminal information and the first image data.
